# EUROPÄISCHE PATENTANMELDUNG

(11) **EP 0 983 879 A1**
(43) Veröffentlichungstag der Anmeldung: **08.03.2000**
(21) Anmeldenummer: 99117049.9
(22) Anmeldetag: 30.08.1999
(51) Int. Cl.: B60D 1/02

(54) **Kupplung zur gelenkigen Verbindung eines Zugfahrzeugs und eines Nachlauffahrzeugs, Fernbetätigungseinrichtung**

(30) Priorität: 31.08.1998 DE 19839628; 02.11.1998 DE 19850471
(71) Anmelder: ROCKINGER Spezialfabrik für Anhängerkupplungen GmbH & Co., D-80935 München (DE)
(72) Erfinder: Malisch, Roman, 85579 Neubiberg (DE); Szczepanek, Udo, 82223 Eichenau (DE)
(74) Vertreter: Herzog, Markus, Dipl.-Phys. Dr.

(57) **Zusammenfassung**

Eine Kupplung zur gelenkigen Verbindung eines Zugfahrzeugs und eines Nachlauffahrzeugs, umfaßt eine mit einem Riegel verbundene Betätigungseinheit zum Öffnen und Schließen der Kupplung, und eine mit der Betätigungseinheit in Eingriff stehende Fernbetätigungseinrichtung (42). Die Fernbetätigungseinrichtung (42) umfaßt einen mittels eines Druckmediums betätigbaren Drucknehmer (40) mit zwei volumenveränderlichen Kammern (40c, 40d), welche durch ein mit der Betätigungseinheit in Eingriff stehendes Drucknehmer-Kolbenelement (40a) getrennt sind. Die Kammern (40c, 40d) sind jeweils an eine Druckmedium-Leitung (44a, 44b) angeschlossen, so daß das Drucknehmer-Kolbenelement (40a) von seinen beiden Seiten her mit Druckmedium beaufschlagt werden kann. Erfindungsgemäß steht das Drucknehmer-Kolbenelement (40a) bei Bewegung in beiden Richtungen mit der Betätigungseinheit in Kraftübertragungseingriff. Ferner sind die beiden Druckmedium-Leitungen (44a, 44b) über ein selbsttätig öffnendes, durch Betätigung von außen verschließbares Bypass-Ventil (52) miteinander verbunden.

## Beschreibung

Die Erfindung betrifft eine Kupplung zur gelenkigen Verbindung eines Zugfahrzeugs und eines Nachlauffahrzeugs, welche eine mit einem Riegel verbundene Betätigungseinheit zum Öffnen und Schließen der Kupplung und eine mit der Betätigungseinheit in Eingriff stehende Fernbetätigungseinrichtung umfaßt, wobei die Fernbetätigungseinrichtung eine mittels eines Druckmediums betätigbare Drucknehmer-Stelleinheit (im folgenden kurz: "Drucknehmer") mit zwei durch ein verlagerbares Drucknehmer-Kolbenelementvoneinander getrennten, volumenveränderlichen Kammern umfaßt, wobei das Drucknehmer-Kolbenelement mit der Betätigungseinheit in Eingriff steht, und wobei die beiden Kammern jeweils an eine Druckmedium-Zuführ/Abführ-Leitung angeschlossen sind, so daß das Kolbenelement sowohl in einer dem Öffnen der Kupplung entsprechenden Richtung als auch in einer dem Schließen der Kupplung entsprechenden Richtung mit Druckmedium beaufschlagbar ist.

Als derartige Kupplungen sind beispielsweise Anhängerkupplungen und Sattelkupplungen bekannt. Bei Anhängerkupplungen durchsetzt der Riegel eine Zugöse einer Deichsel des Nachlauffahrzeugs, um sowohl im Zugbetrieb als auch im Schubbetrieb des Gespanns eine gelenkige Verbindung von Zugfahrzeug und Nachlauffahrzeug sicherzustellen. Bei Sattelkupplungen sichert der Riegel einen den Königszapfen des Nachlauffahrzeugs haltenden Kupplungshaken in einer Kupplungsstellung, um sowohl im Zugbetrieb als auch im Schubbetrieb des Gespanns eine gelenkige Verbindung von Zugfahrzeug und Nachlauffahrzeug zu gewährleisten.

Aus dem Stand der Technik ist es bekannt, derartige Kupplungen fernbetätigbar auszubilden, um dem Fahrer oder einer sonstigen Bedienungsperson das An- bzw. Abkuppeln des Nachlauffahrzeugs zu erleichtern. Die Fernbetätigbarkeit der Kupplung ist insbesondere dann von Vorteil, wenn diese an einer für den Fahrer bzw. die Bedienungsperson nur schwer zugänglichen Stelle am Zugfahrzeug angebracht ist, wie dies beispielsweise bei Anhängerkupplungen für sogenannte Starrdeichselanhänger der Fall ist.

Aus der DE 196 30 897 A1 (und der hierzu parallelen EP 0 823 342 A1) ist eine fernbetätigbare Anhängerkupplung bekannt, bei welcher das Kraftgerät, d.h. die Drucknehmer-Stelleinheit, den Riegel über einen Hebelmechanismus aus der Kupplungsstellung in eine Freigabe- bzw. Kupplungsbereitschaftsstellung überführen kann, welche ein Abkuppeln des Nachlauffahrzeugs bzw. ein erneutes Ankuppeln eines Nachlauffahrzeugs ermöglicht. Das Kolbenelement des Kraftgeräts wird nach Beendigung der Überführung des Riegels in die Freigabe- bzw. Kupplungsbereitschaftsstellung sowie Beendigung der Druckmediumzufuhr durch Federkraft in die Ausgangsstellung zurückgeführt, wobei das Kolbenelement außer Eingriff mit dem Hebelmechanismus tritt. Der Riegel wird dabei mittels eines Sicherungselements des Hebelmechanismus in der Kupplungsbereitschaftsstellung gehalten. Beim Einführen der Zugöse der Deichsel eines Nachlauffahrzeugs wird das Sicherungselement aus seiner Sicherungsstellung ausgerückt, so daß der Riegel unter Federvorspannung sowie schwerkraftbedingt in die Kupplungsstellung zurückfallen kann.

Nun kommt es im Alltagsbetrieb gelegentlich vor, daß die Deichsel des Nachlauffahrzeugs beim Einführen der Zugöse in das Kupplungsmaul eine relativ große Schräglage aufweist. Es kann dann geschehen, daß die Zugöse zwar die Rückführung des Riegels aus der Kupplungsbereitschaftsstellung in die Kupplungsstellung auslöst, daß die Federvorspannung des Riegels aber nicht ausreicht, um den Riegel tatsächlich bis in die Kupplungsstellung überführen zu können. In diesem Fall bleibt der Bedienungsperson häufig nichts anderes übrig, als den gesamten Kupplungsvorgang zu wiederholen, d.h. Zugfahrzeug und Nachlauffahrzeug nochmals vollständig voneinander zu trennen und erneut aneinander anzunähern. Nicht zuletzt wird das hiermit verbundene Rangieren des Zugfahrzeugs als lästig empfunden.

Aus der gattungsbildenden EP 0 675 012 B1 (und der hierzu parallelen DE 94 05 462 U) ist eine Anhängerkupplung bekannt, deren Aufbau im wesentlichen jenem der aus den vorstehend diskutierten Druckschriften bekannten Kupplung entspricht. Im Gegensatz zu diesen wird jedoch bei einer Ausführungsform das Kolbenelement des Kraftgeräts nach Beendigung der Überführung des Riegels in die Kupplungsbereitschaftsstellung nicht durch Federkraft in die Ausgangsstellung zurückgeführt, sondern durch Fluidkraft. Hierzu ist das Kraftgerät als bidirektional wirkendes Kraftgerät ausgebildet, d.h. als ein Kraftgerät, bei welchem das Kolbenelement auf seinen beiden Seiten druckbeaufschlagbar ist. Um bei der Rückführung des Kolbenelements in die Ausgangsstellung das Kolbenelement - wie bei der EP 0 823 342 A1 und der DE 196 30 897 A1 - von dem Hebelmechanismus entkoppeln zu können, ist bei der EP 0 675 012 B1 bzw. der DE 94 05 462 U ein Freilaufmechanismus vorgesehen. In der Praxis treten daher bei der aus der EP 0 675 012 B1 und der DE 94 05 462 U bekannten Kupplung die gleichen Probleme auf wie sie vorstehend am Beispiel der EP 0 823 342 A1 bzw. der DE 196 30 897 A1 diskutiert wurden.

Das vorstehend diskutierte Entkoppeln von Kolbenelement und Hebelmechanismus nach Herbeiführen der Freigabe- bzw. Kupplungsbereitschaftsstellung des Riegels hat sowohl bei einer Fernbetätigung von Hand als auch bei einer automatischen Fernbetätigung sicherheitstechnische Relevanz. Blieben das Kolbenelement und der Hebelmechanismus miteinander gekoppelt, so würde das Kolbenelement beim Lösen des Riegels infolge des Ankuppelns eines Nachlauffahrzeugs schlagartig aus der Kupplungsbereitschaftsstellung in die Ausgangsstellung zurückgeführt, und der hierdurch hervorgerufene Druckschlag in dem Druckmedium würde auf den Druckgeber rückwirken. Dies würde im Falle einer automatisch fernbetätigbaren Kupplung zu einer unerwünschten Druckbelastung der Druckmedium-Pumpe führen, und im Falle einer von Hand fernbetätigbaren Kupplung zu einem unerwarteten Schlagen eines Betätigungshebels bzw. Betätigungsgriffs des Druckgebers. Insbesondere letzteres beschwört die Gefahr einer Verletzung des Fahrers bzw. der Bedienungsperson herauf und kann nicht toleriert werden.

Weitere fernbetätigbare Kupplungen sind aus der DE 94 01 718 U, der DE 91 12 245 U, der DE 37 26 823 A1, der DE 29 24 359 A1 und dem französischen Patent mit der Veröffentlichungsnummer 2 094 325 bekannt.

Demgegenüber ist es Aufgabe der vorliegenden Erfindung, eine Kupplung der eingangs genannten Art derart weiterzubilden, daß es auch dann, wenn nach dem Auslösen des Riegels aus der Kupplungsbereitschaftsstellung dessen Federvorspannung nicht ausreicht, um ihn vollständig in die Kupplungsstellung überzuführen, möglich ist, letztendlich doch die Kupplungsstellung zu erreichen, ohne daß der Kupplungsvorgang wiederholt werden muß, und dies unter Wahrung der Betriebssicherheit der Kupplung.

Diese Aufgabe wird erfindungsgemäß durch eine Kupplung der eingangs genannten Art gelöst, bei welcher das Drucknehmer-Kolbenelement sowohl bei Bewegung in der dem Öffnen der Kupplung entsprechenden Richtung als auch bei Bewegung in der dem Schließen der Kupplung entsprechenden Richtung mit der Betätigungseinheit in Kraftübertragungseingriff steht, und bei welchem die beiden an die Kammern des Drucknehmers angeschlossenen Druckmedium-Zuführ/Abführ-Leitungen über ein selbsttätig öffnendes, durch Betätigung von außen verschließbares Bypass-Ventil miteinander verbunden sind.

Erfindungsgemäß kann die Drucknehmer-Stelleinheit auf den Riegel nicht nur in einer dem Öffnen der Kupplung entsprechenden Richtung eine Kraft ausüben, sondern auch in einer dem Schließen der Kupplung entsprechenden Richtung. Hierdurch kann im Bedarfsfalle mittels der Fernbetätigungseinrichtung dann, wenn die Federvorspannkraft nicht ausreicht, um den Riegel in dessen Kupplungsstellung überzuführen, auf diesen Riegel eine die Federvorspannkraft unterstützende zusätzliche Kraft ausgeübt werden. Diese zusätzliche Kraft reicht in einer Vielzahl von Fällen aus, um den Riegel doch noch in die Kupplungsstellung überführen zu können, ohne den gesamten Kupplungsvorgang wiederholen zu müssen.

Der vorstehend angesprochenen Sicherheitsproblematik wird durch das selbsttätig öffnende, durch Betätigung von außen verschließbare Bypass-Ventil entsprochen. In seinem geöffneten Zustand ermöglicht dieses Bypass-Ventil einen Fluß von Druckmedium von der einen Kammer des Drucknehmers zur jeweils anderen Kammer des Drucknehmers. Bei der plötzlichen Überführung des Riegels aus der Kupplungsbereitschaftsstellung in die Kupplungsstellung und der damit einhergehenden plötzlichen Rückführung des Kolbenelements des Drucknehmers kann das aus der einen Kammer des Drucknehmers verdrängte Druckmedium somit problemlos in die andere Kammer des Drucknehmers strömen, so daß eine Rückwirkung auf den Druckgeber sowohl im Falle eines handbetätigbaren Druckgebers als auch im Falle eines automatisch betätigbaren Druckgebers zuverlässig ausgeschlossen ist.

Bei der Fernbetätigungseinrichtung der erfindungsgemäßen Kupplung sind die Geber- und die Nehmerseite somit in beiden Betätigungsrichtungen normalerweise fluidisch entkoppelt. Durch äußere Betätigung, sei es durch äußere Betätigung von Hand oder durch ein von einer Steuereinheit gesteuertes Stellglied, kann das Bypass-Ventil geschlossen werden, um die Geberseite und die Nehmerseite in Wirkverbindung miteinander zu setzen, und zwar wiederum in beiden Betätigungsrichtungen.

Das Bypass-Ventil kann beispielsweise derart ausgebildet sein, daß es bei Beendigung einer Betätigung von außen unabhängig von einem etwaigen Druckmediumdurchfluß schließt. In diesem Fall muß das Bypass-Ventil während der gesamten Dauer einer Kraftausübung auf den Riegel, sei es in Öffnungsrichtung oder in Schließrichtung der Kupplung, geschlossen gehalten werden. Es ist jedoch ebenso denkbar, daß das Bypass-Ventil derart ausgebildet ist, daß es nach Beendigung einer Betätigung von außen erst dann schließt, wenn die es pro Zeiteinheit durchströmende Menge an Druckmedium einen vorbestimmten Schwellenwert unterschreitet.

Für den vorstehend bereits angesprochenen Fall einer durch eine Bedienungsperson betätigbaren Druckgeber-Einheit wird vorgeschlagen, daß diese Druckgeber-Einheit zwei durch ein verlagerbares Druckgeber-Kolbenelement voneinander getrennte, volumenveränderliche Kammern umfaßt, von denen jede an eine der Druckmedium-Zuführ/Abführ-Leitungen angeschlossen ist, wobei das Druckgeber-Kolbenelement mit einem Betätigungselement, vorzugsweise einem Handbetätigungselement, verbunden ist. Selbstverständlich ist es auch möglich, anstelle eines Handbetätigungselements ein Fußbetätigungselement, beispielsweise ein Pedal, zum Verstellen des Druckgeber-Kolbenelements vorzusehen.

Um sicherstellen zu können, daß sich das Druckgeber-Kolbenelement zu Beginn einer Betätigung des Druckgebers in dessen Ausgangsstellung befindet, wird vorgeschlagen, daß eine Federeinheit vorgesehen ist, welche das Druckgeber-Kolbenelement und das Betätigungselement in eine Ausgangsstellung vorspannt. Mittels dieser Federeinheit wird das Druckgeber-Kolbenelement nach fluidischer Trennung von Geber- und Nehmerseite automatisch wieder in die Ausgangsstellung zurückgeführt.

Für den Fall einer handbetätigbaren Auslegung der erfindungsgemäßen Kupplung kann diese sowohl als einhand-betätigbare Kupplung als auch als zweihand-betätigbare Kupplung ausgebildet sein. Bei der Zweihand-Ausführung kann das Bypass-Ventil als vom Druckgeber gesondertes Bauelement ausgeführt sein und an einem von diesem entfernten, wenn auch nicht allzu weit entfernten Ort am Zugfahrzeug angebracht sein. Zur Betätigung der Kupplung muß die Bedienungsperson zunächst beispielsweise mit der linken Hand das Bypass-Ventil in dessen Schließstellung überführen und in dieser Stellung halten, während sie mit der rechten Hand den mit dem Druckgeber-Kolbenelement verbundenen Betätigungshebel bedient. Da somit während der Betätigung der Kupplung beide Hände der Bedienungsperson an vorbestimmten Stellen angeordnet sind, zeichnet sich die zweihand-betätigbare Kupplung durch geringes Verletzungsrisiko aus.

In bestimmten Einsatzfällen kann jedoch auch der Einhand-Ausführung der Kupplung der Vorzug gegeben werden. Zur Realisierung der Einhand-Betätigbarkeit kann vorgesehen sein, daß das Betätigungselement ferner zur Betätigung des Bypass-Ventils ausgebildet ist. Dies kann beispielsweise dadurch erzielt werden, daß das Betätigungselement zwei relativ zueinander und gemeinsam bewegbare Teile umfaßt, wobei das Bypass-Ventil durch eine Relativbewegung der beiden Teile betätigbar ist, und das Druckgeber-Kolbenelement durch eine gemeinsame Bewegung der beiden Teile verlagerbar ist. Bei einer Ausführungsform des Drehgebers, bei welchem das Drehgeber-Kolbenelement durch Verschwenken eines Betätigungshebels herbeigeführt wird, der ein Griffteil und ein mit der Schwenkachse, d.h. der Betätigungswelle des Druckgebers, fest verbundenes Schwenkachsenteil umfaßt, kann zur Realisierung einer Relativbewegung der beiden Teile sowie einer gemeinsamen Bewegung der beiden Teile das Griffteil an dem Schwenkachsenteil um eine Griffachse verdrehbar angeordnet sein. Zur Betätigung des Bypass-Ventils kann bei dieser Ausführungsform das Griffteil im Bereich seines betätigungswellennahen Endes einen Mitnehmer aufweisen, der mit einem im Inneren der hohlen Betätigungswelle aufgenommenen, mit dem Bypass-Ventil in Wirkverbindung stehenden Stellgestänge in Mitnahmeeingriff bringbar ist.

Sowohl bei einer einhand-betätigbaren Kupplung als auch bei einer zweihand-betätigbaren Kupplung kann unabhängig davon, ob das Bypass-Ventil von Hand oder automatisch betätigt wird, vorgesehen sein, daß in einem die beiden Druckmedium-Zuführ/Abführ-Leitungen verbindenden Leitungsabschnitt des Bypass-Ventiles zwei einander entgegengesetzt angeordnete Sitzventile angeordnet sind, deren Ventilkörper zum Öffnen des Bypass-Ventils mittels eines Stellelements von den jeweiligen Ventilsitzen abhebbar sind. Das selbsttätige Öffnen des Bypass-Ventils kann dabei dadurch sichergestellt werden, daß das Stellelement in die die Sitzventile öffnende Stellung vorgespannt ist.

Alternativ zu der vorstehend diskutierten Sitzventilausbildung kann das Bypass-Ventil auch als Schieberventil ausgebildet sein, beispielsweise in der Art, daß in einem die beiden Druckmedium-Zuführ/Abführ-Leitungen verbindenden Leitungsabschnitt ein Schieberventil vorgesehen ist, wobei der Ventilschieber mit einer Umfangsausnehmung versehen ist, welche derart angeordnet und bemessen ist, daß in einer ersten Stellung des Ventilschiebers die beiden an das Schieberventil angrenzenden Teile des Leitungsabschnitts über die Umfangsausnehmung miteinanderverbunden sind, während sie in einer zweiten Stellung des Ventilschiebers voneinander getrennt sind. Dabei kann zur Sicherstellung des selbsttätigen Öffnens des Bypass-Ventils vorgesehen sein, daß der Ventilschieber in die erste Stellung vorgespannt ist.

Für den Fall der Einhand-Betätigung wird vorgeschlagen, daß das Stellgestänge unmittelbar oder mittelbar auf das Stellelement der "Sitzventil-Ausführung" des Bypass-Ventils einwirkt, während es bei der "Schieberventil-Ausführung" auf den Ventilschieber einwirkt. Bei der Zweihand-Betätigung der erfindungsgemäßen Kupplung erfolgt die Einwirkung auf das Stellelement bzw. den Ventilschieber von Hand.

In einer einfachen, raumsparenden und im Falle des Druckgebers ergonomisch günstig zu betätigenden Ausführungsform wird vorgeschlagen, daß wenigstens eine der Einheiten, Druckgeber oder Drucknehmer, einen Ringraum umfaßt, der zum einen durch das jeweilige Kolbenelement und zum anderen durch eine Ringraum-Unterteilungsanordnung in die beiden Kammern unterteilt ist. Ein weiterer Vorteil der Ringsymmetrie ist darin zu sehen, daß die Anzahl der Dichtungen zur äußeren Umgebung hin niedrig gehalten und mit kostengünstig erhältlichen Dichtungselementen, beispielsweise herkömmlichen O-Ringen, bewerkstelligt werden kann.

Zur Sicherstellung einer fluiddichten Trennung der beiden Kammern, wird vorgeschlagen, daß das Kolbenelement an seinem radial äußeren Ende eine Ausnehmung zur Aufnahme eines Dichtungselements aufweist, oder/und daß die Ringraum-Unterteilungsanordnung ein Dichtungselement und zwei Dichtungshalte-Elemente umfaßt.

Wiederum im Hinblick auf einen möglichst einfachen Aufbau von Druckgeber bzw. Drucknehmer wird vorgeschlagen, daß die Dichtungshalte-Elemente identisch ausgebildet und im Ringraum spiegelsymmetrisch zueinander angeordnet sind. Dabei können die Dichtungshalte-Elemente an einem Ringraum-Gehäuse beispielsweise durch Steckverbindungen befestigbar sein.

Zur Reduzierung der Investitions- und Herstellungskosten wird vorgeschlagen, daß das im Kolbenelement aufgenommene Dichtungselement und das Dichtungselement der Ringraum-Unterteilungs anordnung identisch ausgebildet sind. Dabei wird zur Sicherstellung einer möglichst effektiven Dichtung vorgeschlagen, daß das Dichtungselement einen im wesentlichen rechteckförmigen Grundriß aufweist, wobei längs des Umfangs dieser Rechtecks-Form zwei voneinander beabstandete Dichtungslippen verlaufen.

Das Kolbenelement kann mit einer im Bereich der Ringachse verlaufenden Betätigungswelle verbunden sein.

Wiederum im Hinblick auf einfachen Aufbau von Druckgeber oder/und Drucknehmer wird vorgeschlagen, daß der Ringraum von einem Gehäuse umschlossen ist, das ein Ringraumbegrenzungselement mit im wesentlichen kreiszylindrischer Innenfläche sowie ein Deckelelement und ein Bodenelementumfaßt. Dabei können im Deckelelement oder/und im Bodenelement Anschlußstellen für die beiden Druckmedium-Zuführ/Abführ-Leitungen und gewünschtenfalls für wenigstens ein Entlüftungsventil vorgesehen sein.

Zur Senkung der Herstellungskosten wird vorgeschlagen, den Druckgeber bzw. den Drucknehmer modular aus vorbestimmten Baugruppen zusammenzusetzen, so daß aus einer geringen Anzahl derartiger Baugruppen eine große Vielzahl verschiedener Ausführungsvarianten bereitgestellt werden kann. Hierzu wird insbesondere vorgeschlagen, daß die beiden Einheiten, Druckgeber und Drucknehmer, baugleich ausgeführte Basis-Baugruppen umfassen.

Im Falle des Druckgebers kann die selbsttätige Rückführung des Druckgeber-Kolbenelements in dessen Ausgangsstellung dadurch gewährleistet werden, daß die Basis-Baugruppe mit einer Feder-Baugruppe verbunden ist, welche das Druckgeber-Kolbenelement in die Ausgangsstellung vorspannt.

Eine Übersetzung eines vorbestimmten Druckgeber-Stellwegs in einen längeren oder auch kürzeren Stellweg aufseiten des Drucknehmers kann beispielsweise dadurch erhalten werden, daß wenigstens eine der Einheiten, Druckgeber oder/und Drucknehmer, eine Mehrzahl von Basisbaugruppen umfaßt.

Wie vorstehend bereits mehrfach angesprochen, kann die erfindungsgemäße Kupplung eine Anhängerkupplung sein, bei welcher der Riegel zur gelenkigen Verbindung von Zugfahrzeug und Nachlauffahrzeug eine Zugöse einer Deichsel des Nachlauffahrzeugs durchsetzt. Es ist jedoch ebenso möglich, daß sie eine Sattelkupplung ist, bei welcher der Riegel zur gelenkigen Verbindung von Zugfahrzeug und Nachlauffahrzeug einen den Königszapfen des Nachlauffahrzeugs haltenden Kupplungshaken in einer Kupplungsstellung sichert. Auch bei derartigen Sattelkupplungen ist es möglich, daß aufgrund eines Verkantens von Königszapfen und Kupplungshaken oder dergleichen Effekten der Kupplungshaken nach Auslösen aus seiner Kupplungsbereitschaftsstellung nicht vollständig in seine Kupplungsstellung verschwenken kann. Um eine Wiederholung des Kupplungsvorgangs vermeiden zu können, kann bei einer erfindungsgemäß ausgerüsteten Sattelkupplung mittels einer auf den Riegel ausgeübten Kraft "nachgeholfen" und der Kupplungshaken mittels des Riegels vollständig in die Kupplungsstellung verschwenkt werden.

Nach einem weiteren Gesichtspunkt betrifft die Erfindung darüber hinaus eine Fernbetätigungseinrichtung, die beispielsweise zum Einsatz bei der vorstehend diskutierten Kupplung geeignet ist. Hinsichtlich der Ausführungsvarianten und der damit erzielbaren Vorteile sei auf die vorstehenden Erläuterungen der erfindungsgemäßen Kupplung verwiesen.

Die Erfindung wird im folgenden an Ausführungsbeispielen anhand der beigefügten Zeichnung näher erläutert werden. Es stellt dar:
- Fig. 1: eine Frontansicht einer erfindungsgemäßen Anhängerkupplung;
- Fig. 2: eine Seitenansicht der Anhängerkupplung gemäß Fig. 1 in Richtung des Pfeils P;
- Fig. 3: eineschematische Darstellung einer erfindungsgemäßen Fernbetätigungseinrichtung mit linear betätigbaren Zylinder-Kolben-Einheiten sowohl auf Druckgeberseite als auch auf Drucknehmerseite;
- Fig. 4: eine Schnittdarstellung eines schwenkbetätigbaren Druckgebers;
- Fig. 5: einen Schnitt längs der Linie V-V in Fig. 4 der Basis-Baugruppe des Druckgebers gemäß Fig. 4;
- Fig. 6: einen Schnitt längs der Linie VI-VI durch die Feder-Baugruppe des Druckgebers gemäß Fig. 4;
- Fig. 7: eine Schnittdarstellung ähnlich Fig. 4 eines Drucknehmers;
- Fig. 8: eine Schnittdarstellung einer Schieberventil-Ausführung eines Bypass-Ventils;
- Fig. 9: eine Schnittdarstellung ähnlich Fig. 4 eines zur Einhand-Betätigung ausgelegten Druckgebers mit integriertem Bypass-Ventil in "Sitzventil-Ausführung";
- Fig. 10: eine Darstellung eines Details von Fig. 9 in Richtung des Pfeils X in Fig. 9 gesehen;
- Fig. 11: eine Druntersicht unter eine mit einer erfindungsgemäßen Fernbetätigungseinrichtung ausgerüsteten Sattelkupplung;
- Fig. 12 und 13: Darstellungen analog Fig. 11 weiterer Ausführungsformen erfindungsgemäß ausgerüsteter Sattelkupplungen; und
- Fig. 14: eine Darstellung zur Erläuterung von Aufbau und Funktion eines Hydraulikkreises einer erfindungsgemäßen Fernbetätigungseinrichtung.

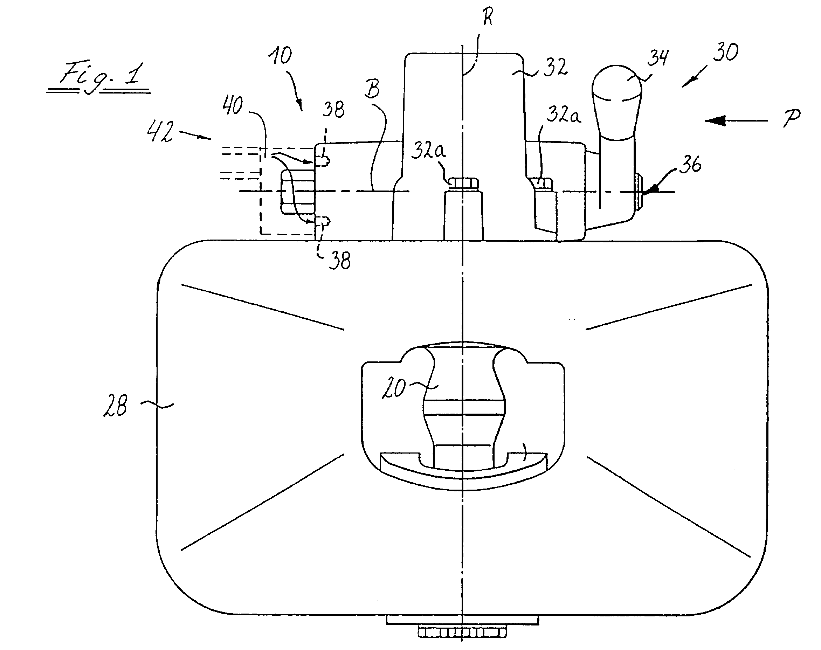

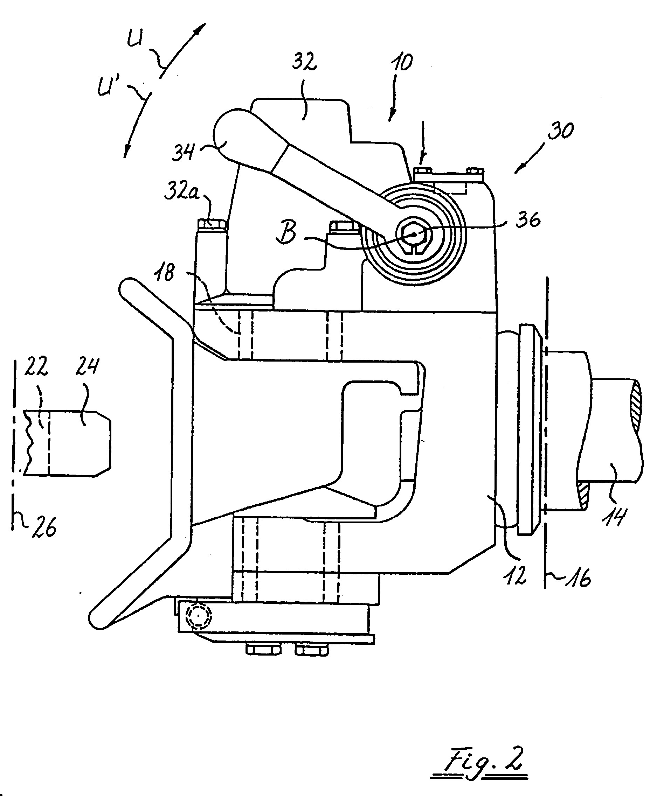

In den Fig. 1 und 2 ist eine erfindungsgemäße Anhängerkupplung allgemein mit 10 bezeichnet. Die Anhängerkupplung 10 umfaßt einen Kupplungskörper 12 mit einer Zugstange 14, welche in an sich bekannter Weise in einem Zugstangenlager eines grobschematisch bei 16 angedeuteten Zugfahrzeugs gelagert ist. An dem Kupplungskörper 12 ist eine Führungsbuchse 18 (in Fig. 2 gestrichtelt angedeutet) befestigt, in welcher ein Kupplungsbolzen bzw. Kupplungsriegel 20 höhenverstellbar aufgenommen ist. In Fig. 1 ist der Kupplungsbolzen 20 in seiner Kupplungsstellung dargestellt, in welcher er eine Zugöse 22 der Deichsel 24 eines grobschematisch bei 26 angedeuteten Nachlauffahrzeugs durchgreifen und so eine Verbindung zwischen der Anhängerkupplung 10 des Zugfahrzeugs 16 und der Deichsel 24 des Nachlauffahrzeugs 26 herstellen kann.

Was die Ausbildung und Lagerung des Kupplungsmauls 28 am Kupplungskörper 12 anbelangt, entspricht die erfindungsgemäße Anhängerkupplung 10 herkömmlichen Anhängerkupplungen des Stands der Technik, so daß auf eine Erläuterung dieser Details hier verzichtet werden kann.

Im oberen Bereich des Kupplungskörpers 12 ist ferner eine Betätigungsmechanik 30 angeordnet, mittels derer der Kupplungsbolzen 20 aus der Kupplungsstellung gemäß Fig. 1 in eine Kupplungsbereitschafts- bzw. Freigabestellung übergeführt werden kann, in welcher er ein Ankuppeln des Nachlauffahrzeugs 26 durch Einführen der Zugöse 22 in die Anhängerkupplung 10 bzw. ein Abkuppeln des Nachlauffahrzeugs 26 durch Herausbewegen der Zugöse 22 aus der Anhängerkupplung 10 ermöglicht. Diese Betätigungsmechanik ist teilweise in einem Gehäuse 32 aufgenommen, welches mittels Schrauben 32a am Kupplungskörper 12 befestigt ist.

Auch der Aufbau der Betätigungsmechanik 30 ist an sich bekannt. Aufbau und Funktion der Betätigungsmechanik werden daher im folgenden nur insoweit beschrieben werden, als es im Zusammenhang mit der vorliegenden Erfindung erforderlich ist.

Die Betätigungsmechanik 30 umfaßt einen Handbetätigungshebel 34, der mit einer Betätigungswelle 36 drehfest verbunden ist. Im Inneren des Gehäuses 32 steht die Betätigungswelle 36 mit einer (nicht dargestellten) Getriebevorrichtung in Eingriff, die ferner mit dem Kupplungsriegel 20 derart verbunden ist, daß sie diesen einerseits bei Verschwenken des Handbetätigungshebels 34 in Richtung des Pfeils U aus der in Fig. 1 dargestellten Kupplungsstellung längs der Riegelachse R in dessen Freigabestellung bzw. Kupplungsbereitschaftsstellung überführen kann und andererseits bei Verschwenken des Betätigungshebels 34 in Richtung des Pfeils U' auf den Kupplungsriegel 20 eine von dessen Kupplungsbereitschaftsstellung auf dessen Kupplungsstellung gemäß Fig. 1 zu gerichtete Kraft ausüben kann.

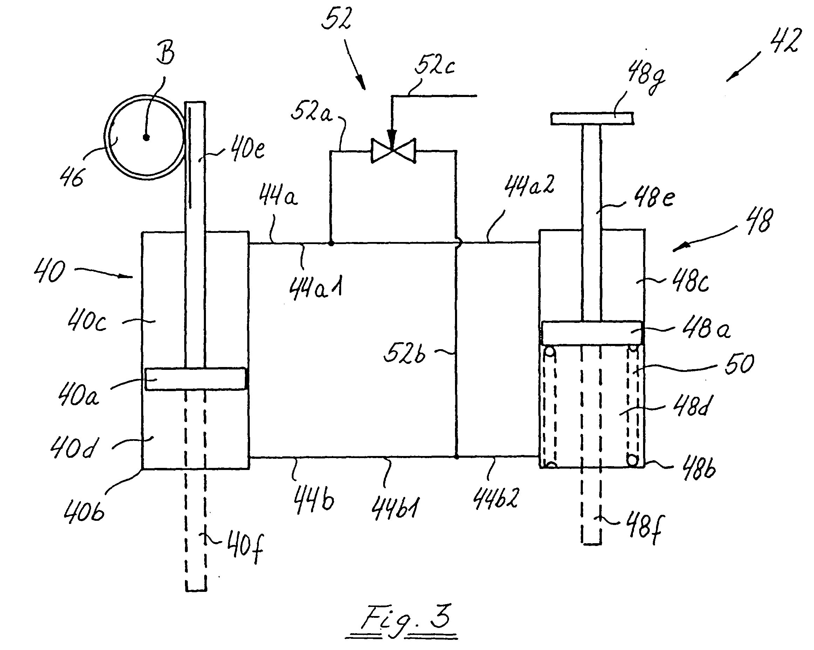

Bei der erfindungsgemäßen Anhängerkupplung 10 ragt die Betätigungswelle 36 auch auf der dem Handbetätigungshebels 34 entgegengesetzten Seite des Gehäuses 32 aus diesem Gehäuse heraus, wie in Fig. 1 links dargestellt ist. Darüber hinaus sind auf dieser Seite des Gehäuses 32 Gewindebohrungen 38 vorgesehen, welche zur Befestigung eines Drucknehmers 40 einer erfindungsgemäßen Fernbetätigungseinrichtung 42, wie sie grobschematisch in Fig. 3 dargestellt ist, dienen. Die Fernbetätigungseinrichtung 42 kann zusätzlich zu der unmittelbaren Handbetätigung mittels des Handbetätigungshebels 34 vorgesehen sein. Es ist jedoch ebenso möglich, die Anhängerkupplung unter Einsatz der erfindungsgemäßen Fernbetätigungseinrichtung 42 ausschließlich fernbetätigbar auszubilden unter Wegfall des Handbetätigungshebels 34.

Im folgenden werden Aufbau und Funktion der Fernbetätigungseinrichtung 42 näher erläutert werden.

Gemäß Fig. 3 umfaßt der Drucknehmer 40 eine Zylinder-Kolben-Einheit mit einem Kolbenelement 40a, das den Innenraum eines Zylinders 40b in zwei Kammern 40c und 40d unterteilt. An die beiden Kammern 40c und 40d sind jeweils eine Druckmedium-Zuführ- bzw. -Abführ-Leitung 44a, 44b angeschlossen. Mittels einer entsprechenden Zufuhr bzw. Abfuhr von Druckmedium in eine der beiden Kammern 40c und 40d hinein und aus der jeweils anderen der Kammern heraus kann der Kolben 40a in gewünschter Art und Weise verlagert werden. Eine mit dem Kolben 40a verbundene Kolbenstange 40e steht mit einem Ritzel 46 in Verzahnungseingriff, so daß eine Linearbewegung der Kolbenstange 40e infolge einer Verlagerung des Kolbens 40a in eine Drehbewegung des Ritzels 46 um eine Betätigungsachse B herum umgesetzt werden kann.

Bei Einsatz des in Fig. 3 schematisch dargestellten Drucknehmers 40 mit linear verstellbaren Kolben 40a bei der Anhängerkupplung 10 gemäß Fig. 1 und 2 kann das Ritzel 46 zur Betätigung des Kupplungsriegels 20 auf der Betätigungswelle 36 der Anhängerkupplung 10 befestigt sein.

Auf der der Kolbenstange 40e entgegengesetzten Seite des Kolbens 40a kann eine Ausgleichsstange 40f vorgesehen sein, die dafür sorgt, daß bei Bewegung des Kolbens 40a der Betrag einer Volumenverringerung in einer der beiden Kammern 40c und 40d gleich dem Betrag der Volumenvergrößerung in der jeweils anderen Kammer ist.

In dem Ausführungsbeispiel gemäß Fig. 3 ist zur Steuerung der Zufuhr bzw. Abfuhr von Druckmedium zum Drucknehmer 40 ein handbetätigbarer Druckgeber 48 vorgesehen. Der Druckgeber 48 umfaßt einen Kolben 48a, der den Innenraum eines Zylinders 48b in zwei Kammern 48c und 48d unterteilt, wobei die beiden Kammern 48c und 48d an jeweils eine der Druckmediumleitungen 44a und 44b angeschlossen sind. Der Kolben 48a ist über eine Stellstange 48e mit einem Griff 48g verbunden. Ferner kann an der der Stellstange 48e entgegengesetzten Seite des Kolbens 48a eine Ausgleichsstange 48f vorgesehen sein, deren Funktion jener der Ausgleichsstange 40f des Drucknehmers 40 identisch ist. Schließlich steht der Kolben 48a unter der Vorspannung einer Feder 50, die in dem dargestellten Ausführungsbeispiel in der unteren Druckmedium-Kammer 48d aufgenommen ist.

Bei Betätigung des Griffs 48g durch eine Bedienungsperson wird das Druckmedium durch die damit einhergehende Verlagerung des Kolbens 48a beispielsweise aus der unteren Druckmedium-Kammer 48d herausgedrängt und strömt über die Leitung 44b in die untere Kammer 40d des Drucknehmers 40. Infolge des an ihm anstehenden Drucks verlagert sich der Kolben 40a in Fig. 3 nach oben und verdrängt seinerseits Druckmedium aus der oberen Kammer 40c über die Leitung 44a in die obere Kammer 48c des Druckgebers 48. Da sich infolge der Betätigung des Griffs 48g mit dem Kolben 40a des Drucknehmers 40 auch dessen Kolbenstange 40e in Fig. 3 nach oben bewegt und das Ritzel 46 um die Betätigungswelle B dreht, kann durch die Betätigung des Griffs 48g der Kupplungsriegel 20 der Anhängerkupplung 10 aus seiner Kupplungsstellung gemäß Fig. 1 in seine Freigabe- bzw. Kupplungsbereitschaftsstellung übergeführt werden. Wird der Griff 48g hingegen im Sinne einer Vergrößerung der unteren Druckmedium-Kammer 48d des Druckgebers 48 verlagert, so resultiert hieraus aufgrund analoger Überlegungen eine Kraft auf den Kupplungsriegel 20, welche von dessen Freigabe- bzw. Kupplungsbereitschaftsstellung auf dessen Kupplungsetellung zu gerichtet ist.

Die erfindungsgemäße Fernbetätigungseinrichtung 42 umfaßt ferner ein Bypass-Ventil 52, das über Leitungsabschnitte 52a und 52b mit den Druckmedium-Leitungen 44a und 44b in Verbindung steht und das zur fluidischen Trennung von Drucknehmer 40 und Druckgeber 48 dient. Um unerwünschte gegenseitige Beeinflussungen von Druckgeber 48 und Drucknehmer 40, beispielsweise infolge einer unbeabsichtigten Einwirkung auf den Griff 48g oder beim Lösen des Kupplungsriegels aus der Kupplungsbereitschaftsstellung infolge der Einführung der Zugöse 22 der Deichsel 24 des Nachlauffahrzeugs 26 in das Kupplungsmaul 28 der Anhängerkupplung 10, verhindern zu können, ist das Bypass-Ventil 52 als selbsttätig öffnendes, durch Einwirkung von außen schließbares Ventil ausgebildet. Im Normalzustand des Bypass-Ventils 52, d.h. dessen geöffnetem Zustand, ist also ein Druckmediumaustausch zwischen der oberen Kammer 48c und der unteren Kammer 48d des Druckgebers bei unbeabsichtigter Einwirkung auf den Griff 48g über die Leitungsabschnitte 44a2 und 52a, das Bypass-Ventil 52 und die Leitungsabschnitte 52b und 44b2 möglich, ohne daß gleichzeitig der Drucknehmer 40 beeinflußt würde. In entsprechender Weise ist beim Lösen des Kupplungsriegels 20 aus dessen Freigabe- bzw. Kupplungsbereitschaftsstellung und einer damit einhergehenden Verlagerung des Kolbenelements 40a ein Druckmediumaustausch zwischen den Kammern 40c und 40d des Drucknehmers über die Leitungsabschnitte 44b1 und 52b, das Bypass-Ventil 52 und die Leitungsabschnitte 52a und 44a1 möglich, ohne daß hierbei der Druckgeber 48 beeinflußt würde.

Die Betätigung des Bypass-Ventils kann beispielsweise von Hand erfolgen. Es ist jedoch ebenso möglich, das Bypass-Ventil 52 mittels einer nicht dargestellten Steuereinheit automatisch zu betätigen. Beide Betätigungsarten sind in Fig. 3 durch den Pfeil 52c angedeutet.

Nachzutragen ist noch, daß der Druckgeber 48 nicht notwendigerweise ein von Hand betätigbarer Druckgeber zu sein braucht, sondern daß erfindungsgemäß ebenso eine von einer nicht dargestellten Steuereinheit automatische betätigbare Druckmedium-Pumpe eingesetzt werden kann. In jedem Fall ist jedoch erfindungsgemäß ein selbsttätig öffnendes und nur durch äußere Betätigung schließbares Bypass-Ventil in der vorstehend beschriebenden Weise vorzusehen.

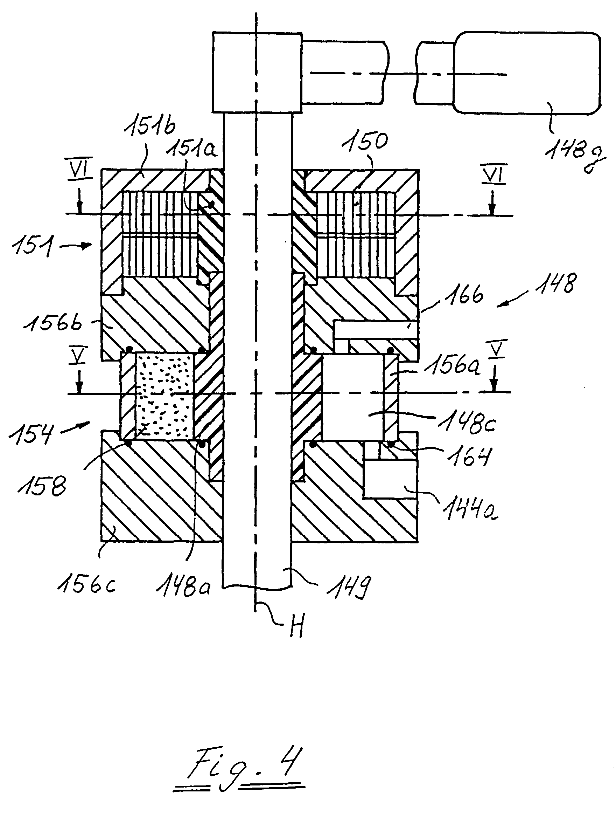

Bei dem Ausführungsbeispiel gemäß Fig. 3 sind sowohl der Drucknehmer 40 als auch der Druckgeber 48 als linear verstellbare Zylinder-Kolben-Einheiten ausgebildet. Ebensogut können jedoch zylindersymmetrisch aufgebaute Drucknehmer und Druckgeber mit um die Zylinderachse dreh- bzw. schwenkverstellbaren Kolben eingesetzt werden. In Fig. 4 ist eine schematische geschnittene Seitenansicht eines derartigen Druckgebers gezeigt. Da die Funktion des in Fig. 4 dargestellten Druckgebers im wesentlichen jener des Druckgebers gemäß Fig. 3 entspricht, sind in Fig. 4 analoge Teile mit gleichen Bezugszeichen versehen wie in Fig. 3, jedoch vermehrt um die Zahl 100.

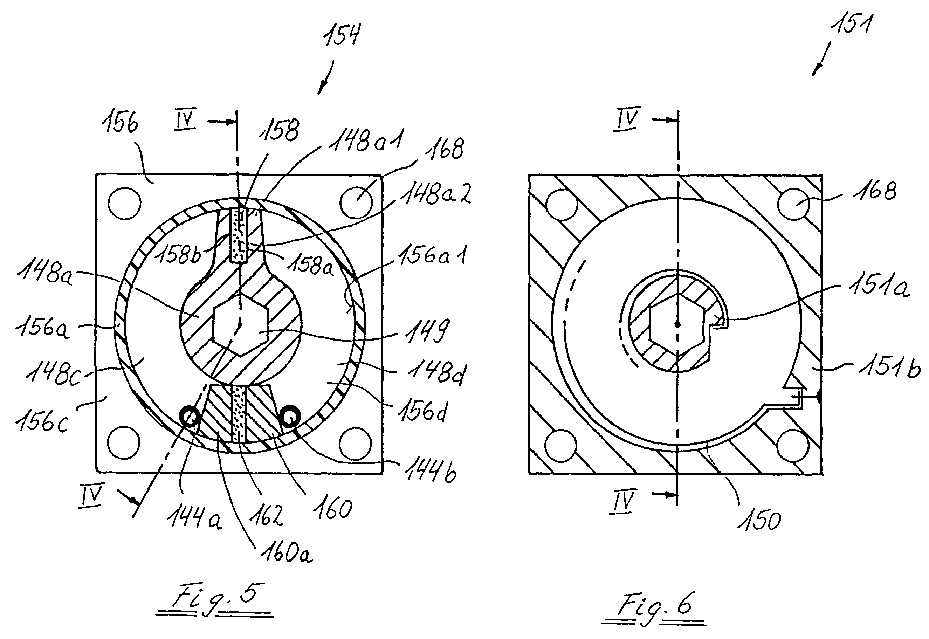

Der Druckgeber 148 ist modular aufgebaut und umfaßt eine Basis-Baugruppe 154, die den eigentlichen Druckgeber beinhaltet, sowie eine Feder-Baugruppe 151. Schnittdarstellungen der Basis-Baugruppe 154 und der Feder-Baugruppe 151 längs der Linie V-V bzw. VI-VI in Fig. 4 sind in den Fig. 5 und 6 dargestellt, auf welche nachfolgend ebenfalls Bezug genommen wird.

Die Basis-Baugruppe 154 umfaßt ein Gehäuse 156, das von einem Seitenwandelement 156a mit im wesentlichen kreiszylindrischer Innenfläche 156a1, einem Deckelteil 156b und einem Bodenteil 156c gebildet ist. Das Gehäuse 156 wird längs der Betätigungsachse H von einer Betätigungswelle 149 durchsetzt. Auf der Betätigungswelle 149 ist eine Kolben-Einheit 148a angeordnet, die mit ihrem radial äußeren Ende 148a1 an der Innenfläche 156a1 des Gehäuses 156 entlang gleitet. Von dem radial äußeren Ende 148a1 her ist in der Kolben-Einheit 148a eine Ausnehmung 148a2 vorgesehen, in der ein Dichtungselement 158 aufgenommen ist.

Die Kolben-Einheit 148a unterteilt den Ringraum 156d im Inneren des Gehäuses 156 zusammen mit einer Dichtungsanordnung 160 in zwei Druckmedium-Kammern 148c und 148d. An die beiden Kammern 148c und 148d sind Druckmediumleitungen 144a und 144b angeschlossen, die im Bodenteil 156c des Gehäuses 156 ausgebildet sind.

Die Dichtungsanordnung 160 umfaßt ein Dichtungselement 162, sowie zwei identisch ausgebildete und im Ringraum 156d spiegelsymmetrisch angeordnete Dichtungshalter 160a. Die Dichtungshalter 160a sind über einfache Steckverbindungen am Bodenteil 156c und am Deckelteil 156b des Gehäuses 156 gehalten. Diese Steckverbindungen können beispielsweise von Zapfen gebildet sein, welche an den Dichtungshaltern 160a einstückig angeformt sind und in entsprechende Vertiefungen im Bodenteil 156c und im Deckelteil 156b eingreifen. Es ist jedoch auch möglich sowohl in den Dichtungshaltern 160a als auch in den Gehäuseteilen 156b und 156c Ausnehmungen vorzusehen und diese Teile über gesondert ausgebildete Zapfenelemente miteinander zu verbinden.

Die Dichtungselemente 158 und 162 sind identisch ausgebildet. Ihr Aufbau soll im folgenden anhand des Dichtungselements 158 näher erläutert werden. Das Dichtungselement 158 weist einen quaderförmigen Aufbau auf mit in Ansicht gemäß Fig. 4 rechteckförmigen Umriß. Längs des gesamten Umrisses ist eine umlaufende Dichtungslippe vorgesehen, und zwar sowohl auf der bei Bewegung des Kolbenelements 148a im Uhrzeigersinn gesehen vorauslaufenden Seite eine Dichtungslippe 158a, als auch auf der nachlaufenden Seite eine Dichtungslippe 158b. Somit ist für beide Drehrichtungen des Kolbenelements 148a eine ausreichende Fluiddichtigkeit zwischen den beiden Kammern 148c und 148d sichergestellt. Die Abdichtung des Ringraums 156d, d.h. der Kammern 148c und 148d, zur äußeren Umgebung hin kann mittels herkömmlicher und somit kostengünstig erhältlicher O-Ringe 164 bereitgestellt werden, die in Fig. 4 grobschematisch als schwarze Punkte angedeutet sind.

In Fig. 4 ist ferner eine Entlüftungsleitung 166 dargestellt, welche zur Kammer 148c führt. Eine entsprechende Entlüftungsleitung kann selbstverständlich auch für die Kammer 148d vorgesehen sein.

Die Betätigung des Druckgebers 148 erfolgt durch Einwirkung auf einen Handdrehhebel 148g, der mit der Betätigungswelle 149 drehfest verbunden ist.

Gemäß Fig. 4 und 6 umfaßt der Druckgeber 148 ferner eine Feder-Baugruppe 151 mit einer Spiralfeder 150, die einenends mit einem mit der Betätigungswelle 136 drehfest verbundenen Element 151a und andernends an einem Gehäuse 151b der Feder-Baugruppe 151 befestigt ist. Wird die Spiralfeder 150 ausgehend von einer Ausgangsstellung, in der sie entspannt ist, durch Verdrehen des Betätigungshebels 148g entweder in der einen oder in der anderen Drehrichtung gespannt, so übt sie auf den Drehhebel 148g und den mit diesem verbundenen Kolben 148a eine in Richtung auf die Ausgangsstellung gerichtete Rückstellkraft aus. Läßt die Bedienungsperson nach Öffnen der Anhängerkupplung 10 den Betätigungshebel 148g los und öffnet infolgedessen das Bypass-Ventil 52 selbsttätig, so wird der Betätigungshebel 148g und mit ihm das Kolbenelement 148a infolge der Rückstellkraft der Feder 150 selbsttätig in die Ausgangsstellung zurückgeführt.

Nachzutragen ist noch, daß an den Gehäuseteilen 156b und 156c der Basis-Baugruppe 154 sowie am Gehäuse 151b der Feder-Baugruppe 151 Bohrungen 168 vorgesehen sind, durch welche Befestigungsschrauben zur Befestigung des Druckgebers 148 am Zugfahrzeug 16 hindurchgeführt werden können.

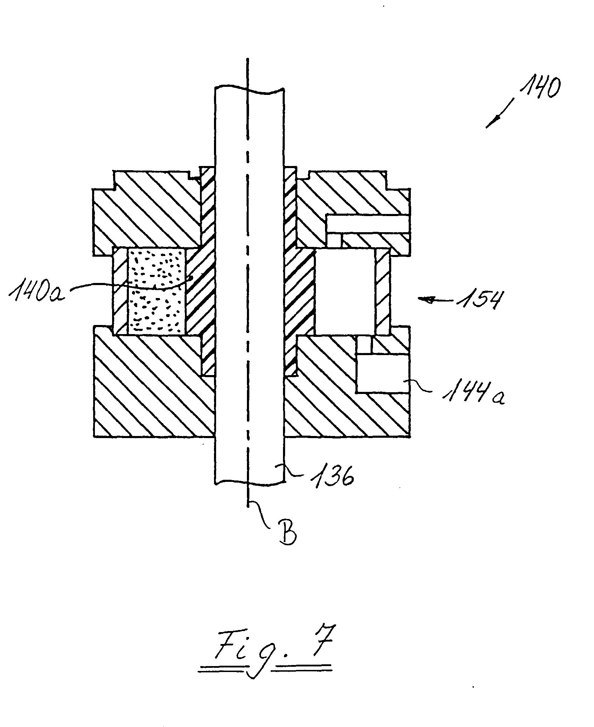

Nachzutragen ist ferner, daß auch der Drucknehmer 140, wie dies in Fig. 7 dargestellt ist, drehbetätigbar ausgebildet sein kann. Der Drucknehmer 140 umfaßt dabei lediglich die Basis-Baugruppe 154, die einen identischen Aufbau aufweist, wie die Basis-Baugruppe 154 des Druckgebers 148. Das Kolbenelement 140a des Drucknehmers 140 ist drehfest auf einer Betätigungswelle 136 angeordnet, welcher mit der Betätigungswelle 36 der Anhängerkupplung 10 einstückig ausgebildet oder mit dieser drehfest verbunden ist. Die Befestigung des Drehnehmers 140 erfolgt über Befestigungsschrauben, welche den Bohrungen 168 entsprechende Bohrungen hindurchgeführt und in die Gewindebohrungen 38 am Gehäuse 32 der Anhängerkupplung 10 eingreifen.

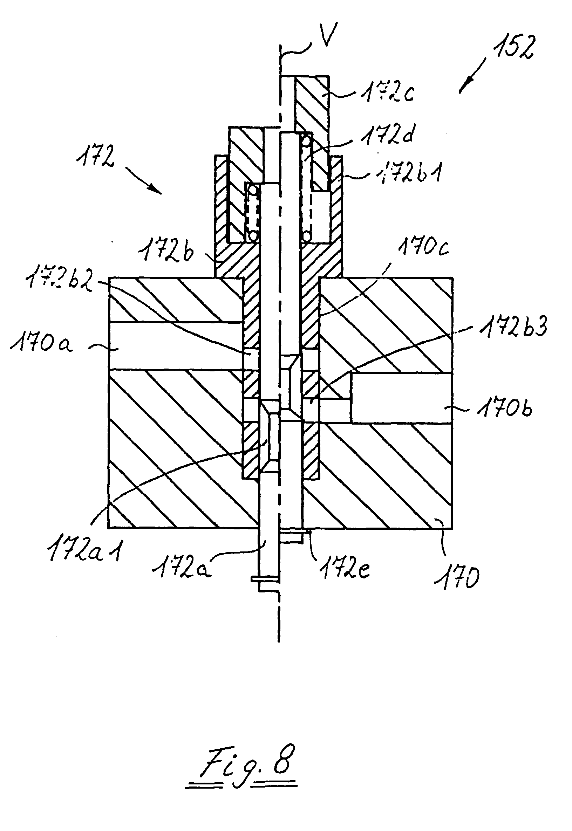

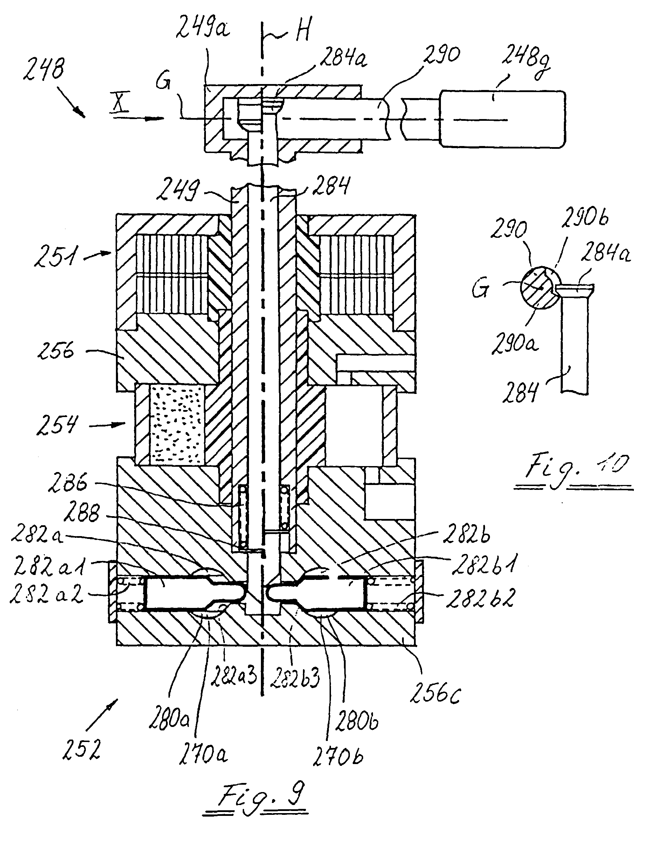

In Fig. 8 ist eine geschnittene Seitenansicht eines selbsttätig öffnenden und durch Betätigung von Hand schließbaren Bypass-Ventils 152 dargestellt. Das Bypass-Ventil 152 gemäß Fig. 8 eignet sich insbesondere in Kombination mit dem Druckgeber 148 gemäß Fig. 4 zur Zweihand-Betätigung der Fernbetätigungseinrichtung 42, wobei eine Bedienungsperson beispielsweise mit der linken Hand das Bypass-Ventil 152 schließt und geschlossen hält, während sie mit der rechten Hand den Betätigungshebel 148g des Druckgebers 148 verdreht.

Das Bypass-Ventil 152 umfaßt einen Basisblock 170 mit Bohrungen 170a und 170b, weiche zum Anschluß der Leitungsabschnitte 52a und 52b dienen. In eine Stufenbohrung 170c, in welche die beiden Bohrungen 170a und 170b münden, ist ein Schieberventil 172 eingesetzt. Das Schieberventil 172 umfaßt einen Ventilschieber 172a, der in einem Führungselement 172b in Richtung der Achse V verschieblich aufgenommen ist. An dem in Fig. 8 oberen Ende des Ventilschiebers 172a ist ein topfförmiges Element 172c befestigt, welches als Druckknopf zur Betätigung des Bypass-Ventils 152 durch eine Bedienungsperson dient. Das Element 172c ist in einem Rohransatz 172b1 des Führungselements 172b verschiebbar geführt. Eine Feder 172d, die sich einenends am Führungselement 172b und andernends am Topfelement 172c abstützt, spannt den Ventilschieber 172a in die in der rechten Hälfte von Fig. 8 dargestellte Stellung vor. Ein Sprengring 172e, der am unteren Ende des Ventilschiebers 172a angeordnet ist, verhindert ein Herausfallen des Ventilschiebers 172a aus dem Führungselement 172b.

An der Außenumfangsfläche des Ventilschiebers 172a ist eine umlaufende Ringausnehmung 172a1 vorgesehen, welche in deren in der rechten Hälfte von Fig. 8 dargestellten Stellung des Ventilschieber 172a Bohrungen 172b2 und 172b3 des Führungselements 172b miteinander verbindet, welche ihrerseits zu den Anschlußbohrungen 170a und 170b der Leitungsabschnitte 52a und 52b führen. Somit ist das Bypass-Ventil 152 in der in Fig. 8 rechts dargestellten Stellung offen. In der in Fig. 8 links dargestellten Stellung ist hingegen die Verbindung zwischen den Bohrungen 172b2 und 172b3 und somit auch zwischen den Anschlußstellen 170a und 170b zu den Leitungsabschnitten 52a und 52b unterbrochen, d.h. das Bypass-Ventil 152 ist geschlossen.

Wie vorstehend erwähnt, spannt die Feder 172d den Ventilschieber 172a in die in Fig. 8 rechts dargestellte Stellung, d.h. die geöffnete Stellung des Bypass-Ventils 152 vor. Zum Schließen des Bypass-Ventils 152 ist es erforderlich, den Druckknopf 172c zu drücken, um so den Ventilschieber 172a aus der in Fig. 8 rechts dargestellten Stellung in die in Fig. 8 links dargestellte Stellung überzuführen. Wird der Druckknopf 172c wieder losgelassen, so kehrt der Druckknopf 172c und mit ihm der Ventilschieber 172a unter der Vorspannung der Feder 172d in die in Fig. 8 rechts dargestellte Stellung zurück, d.h. das Bypass-Ventil 152 öffnet selbsttätig. Und dies aufgrund der druckausgeglichenen Ausbildung des Ventilschiebers 172a auch dann, wenn das Bypass-Ventil 152 noch von Druckmedium durchströmt wird.

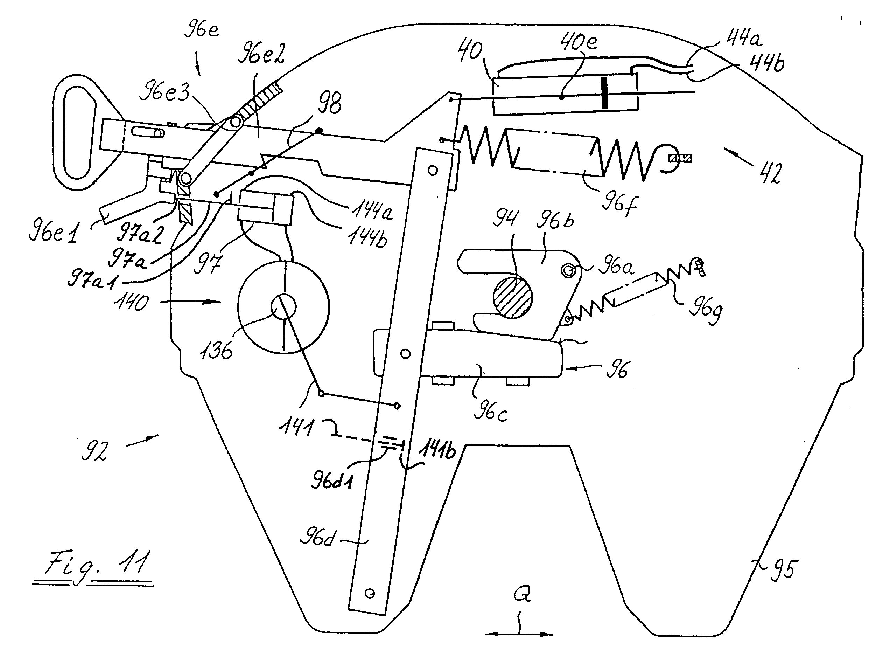

In Fig. 9 ist eine weitere Ausführungsform eines Druckgebers dargestellt. Diese entspricht im wesentlichen dem Druckgeber gemäß Fig. 4. Analoge Teile sind daher mit gleichen Bezugszeichen versehen wie in Fig. 4, jedoch erhöht um die Zahl 100, d.h. im Vergleich mit Fig. 3 erhöht um die Zahl 200.

Der Druckgeber 248 ist im Unterschied zum Druckgeber 148 gemäß Fig. 4 zur Einhand-Betätigung von Bypass-Ventil und Kolbenelement ausgebildet. Hierzu ist das Bypass-Ventil 252 in das Bodenteil 256c des Gehäuses 256 der Basis-Baugruppe 254 des Druckgebers 248 integriert. Die Anschlußbohrungen 270a und 270b zu den Leitungsabschnitten 52a und 52b münden in Ventilkammern 280a und 280b von Sitzventilen 282a und 282b. In diesen Ventilkammern 280a und 280b sind Ventilkörper 282a1 und 282b1 aufgenommen, die von Federn 282a2 bzw. 282b2 gegen Ventilsitze 282a3 bzw. 282b3 vorgespannt sind. Im Inneren der hohlen Betätigungswelle 249 ist eine Ventilbetätigungsstange 284 aufgenommen, welche mittels einer Feder 286, die sich einenends an einer Schulter der Betätigungswelle 249 und andernends an einem an der Ventilbetätigungsatange 284 gesicherten Sprengringes 288 abstützt, in die in Fig. 9 links dargestellte Stellung vorgespannt ist. In dieser Stellung hebt die Ventilbetätigungsstange 284 die beiden Ventilelemente 282a1 und 282b1 entgegen der Vorspannung der Federn 282a2 und 282b2 von den Ventilsitzen 282a3 und 282b3 ab, so daß die beiden Ventilkammern 280a und 280b und somit auch die beiden Anschlußbohrungen 270a und 270b für die Leitungsabschnitte 52a und 52b miteinander in Verbindung stehen. Die in Fig. 9 links dargestellte Stellung entspricht also der geöffneten Stellung des Bypass-Ventils. Aufgrund der Vorspannkraft der Feder 286 ist sichergestellt, daß das Bypass-Ventil 252 selbsttätig öffnet.

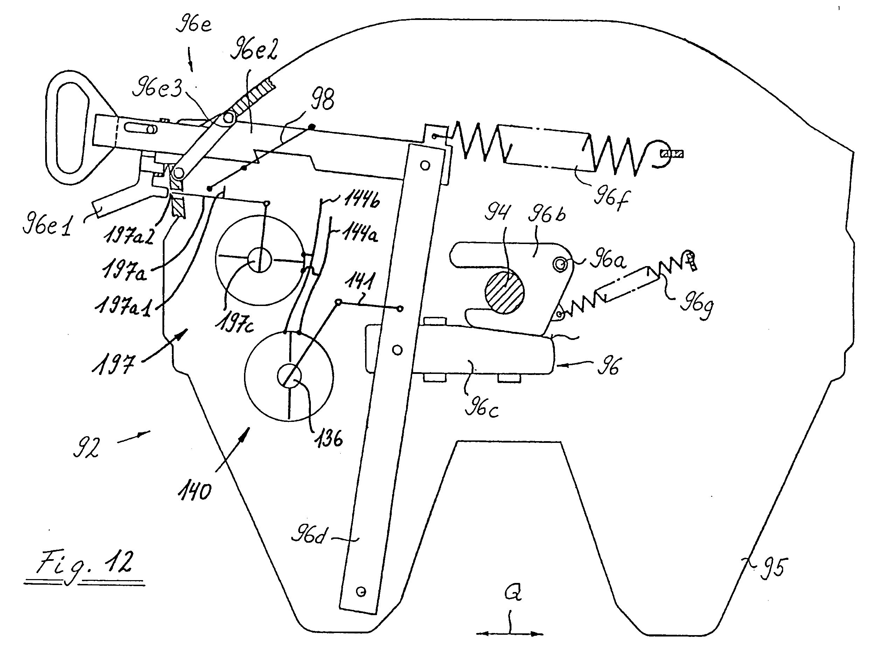

Zum Schließen des Bypass-Ventils 252 muß die Ventilbetätigungsstange 284 entgegen der Vorspannkraft der Feder 286 in die in Fig. 9 rechts dargestellte Stellung übergeführt werden. Hierzu weist die Ventilbetätigungsstange 284 an ihrem oberen Ende einen Angriffsflansch 284a auf, der, wie in dem Detail gemäß Fig. 10 dargestellt ist, mit der Schulter 290a einer Ausnehmung 290b einer Griffstange 290 zusammenwirkt. Die Griffstange 290 ist in einem mit der Betätigungswelle 249 drehfest verbundenen Gehäuseteil 249a um eine zur Betätigungsachse H im wesentlichen orthogonal verlaufende Griffachse G verdrehbar gelagert. Verdreht man die Griffwelle 290 durch entsprechende Betätigung des Griffs 248g derart, daß sich in Sicht gemäß Fig. 10 eine Drehung entgegen dem Uhrzeigersinn ergibt, so gelangt die Schulter 290a in Eingriff mit dem Betätigungsflansch 284a der Ventilbetätigungsstange 284 und hebt diese bei weiterem Verdrehen des Griffs 284g entgegen der Vorspannung der Feder 286 an. Hierdurch gelangt das in Fig. 9 untere Ende des Ventilbetätigungsstange 280 außer Eingriff mit den Ventilelementen 282a1 und 282b1, so daß die Sitzventile 282a und 282b schließen können, was letztenendes eine fluidische Verbindung von Druckgeber und Drucknehmer zur Folge hat.

Hinsichtlich des sonstigen Aufbaus der Basis-Baugruppe 254 sowie Aufbau und Funktion der Feder-Baugruppe 251 sei auf die entsprechenden Ausführungen zum Druckgeber 148 gemäß Fig. 4 verwiesen. Festzuhalten ist, daß das Bypass-Ventil 252 nicht notwendigerweise in dem Bodenteil 256c des Gehäuses 256 der Basis-Baugruppe 254 aufgenommen sein muß, sondern daß es auch möglich ist, eine gesonderte Bypass-Ventil-Baugruppe vorzusehen, die an dem Zugfahrzeug 16 zusammen mit der Basis-Baugruppe und der Feder-Baugruppe durch die Befestigungsschrauben befestigt ist.

Obgleich die Erfindung vorstehend am Beispiel der Anhängerkupplung 10 erläutert worden ist, kann sie ebensogut bei einer Sattelkupplung 92 eingesetzt werden, wie sie in Fig. 11 in Druntersicht schematisch dargestellt ist. Die Sattelkupplung 92 dient zur gelenkigen Verbindung eines geschnitten dargestellten Königszapfens 94 eines (nicht dargestellten) Nachlauffahrzeugs mit der auf einem (ebenfalls nicht dargestellten) Zugfahrzeug angebrachten Sattelplatte 96. Aufbau und Funktion der Sattelplatte sind aus dem Stand der Technik bekannt und werden daher hier nicht erläutert.

Die Sattelkupplung 92 weist ein Kupplungsschloß 96 auf, das einen um einen Gelenkbolzen 96a schwenkbaren Kupplungshaken 96b umfaßt, sowie einen in Querrichtung Q des Zugfahrzeugs verschiebbaren Sperriegel 96c. Aufbau und Funktion des Kupplungsschlosses 96 sind im Stand der Technik bekannt und sollen daher hier nur insoweit beschrieben werden, als es zum Verständnis der Kombination dieses Kupplungsschlosses mit einer erfindungsgemäßen Fernbetätigungseinrichtung erforderlich ist.

Der Sperriegel 96c ist an einem Betätigungsgestänge 96d angelenkt, das mit einer an sich bekannten Handbetätigungsmechanik 96e verbunden ist. Das Betätigungsgestänge 96d und somit der Sperriegel 96c sind mittels einer Feder 96f in eine Kupplungsstellung vorgespannt, in welcher der Sperriegel 96c den Kupplungshaken 96b in einer Königszapfen-Haltestellung sichert. Der Kupplungshaken 96b ist mittels einer Feder 96g in eine Königszapfen-Freigabestellung vorgespannt.

Im Bereich der Anlenkstelle der Feder 96f am Betätigungsgestänge 96d ist der Drucknehmer 40 einer erfindungsgemäßen Fernbetätigungseinrichtung 42 angelenkt, genauer gesagt, die Kolbenstange 40e dieses Drucknehmers 40. Der zugehörige Druckgeber 48, der am Rahmen des Zugfahrzeugs 16 befestigt ist, ist in Fig. 11 nicht dargestellt. Mit Hilfe der Fernbetätigungseinrichtung 42 kann der Sperriegel 96c vermittels des Betätigungsgestänges 96d aus der in Fig. 11 dargestellten Kupplungsstellung nach links in eine Freigabe- bzw. Kupplungsbereitschaftsstellung übergeführt werden. Sollte beim Einführen eines Königszapfens 94 in den Kupplungshaken 96b und dem hieraus resultierenden Verschwenken des Kupplungshakens 96b entgegen der Vorspannung der Feder 96g die Kraft der Feder 96f nicht ausreichen, um den Sperriegel 96c in die in Fig. 11 dargestellte Kupplungsstellung überzuführen, so kann über die erfindungsgemäße Fernbetätigungseinrichtung 42 auf diesen Sperriegel 96c eine zusätzliche in Fig. 11 nach rechts gerichtete Kraft ausgeübt werden. Somit kann in vielen Fällen, in denen es beim Ankuppeln des Nachlauffahrzeugs zu Problemen aufgrund von Klemmung von Königszapfen 94 und Kupplungsschloß 96 kommt, ein erneutes vollständiges Trennen von Zugfahrzeug 16 und Nachlauffahrzeug 26 verhindert werden.

Obgleich beim Einsatz der erfindungsgemäßen Fernbetätigungseinrichtung 42 bei einer Sattelkupplung 92 die Verwendung eines linear verstellbaren Drucknehmers 40 vorteilhaft ist, kann auch ein drehverstellbarer Drucknehmer 140 (siehe Fig. 7) eingesetzt werden, wie er als Alternative zum linear verstellbaren Drucknehmer 40 in Fig. 11 rechts dargestellt ist. Die Ausgangswelle 136 des Drucknehmer 140 ist über eine Hebelmechanik 141 mit dem Betätigungsgestänge 96d verbunden, um bei Druckmediumzufuhr über die Leitungen 144a bzw. 144b auf den Sperriegel 96c eine in dessen Öffnungs- bzw. dessen Schließrichtung gerichtete Kraft ausüben zu können.

Ferner ist ein weiterer Drucknehmer 97 vorgesehen, mittels dessen bei einer Druckmediumzufuhr über die Leitung 144b in einer zweistufigen Bewegung zunächst ein Riegel 96e1 ausgerückt wird, sodaß anschließend die Handbetätigungsstange 96e2 mittels des Hebels 98 verschwenkt werden und somit mit dem ihr Herausziehen bzw. Ausfahren aus der Sattelplatte 95 verhindernden Anschlag 96e3 außer Eingriff gebracht werden kann. Die Kolbenstange 97a des als linearverstellbares Stellglied dargestellten Drucknehmers 97 weist hierzu einen Ansatz 97a1 auf, der bei einer Bewegung der Kolbenstange 97a in Fig. 11 nach links mit dem Hebel 98 erst dann in Eingriff tritt, wenn das freie Ende 97a2 der Kolbenstange 97a den Riegel 96e1 ausgerückt hat. Bei weiterer Bewegung der Kolbenstange 97a in Fig. 11 nach links wird dann durch Zusammenwirken von Ansatz 97a1 und Hebel 98 die Handbetätigungsstange 96e2 verschwenkt.

Die beiden Drucknehmer 140 und 97 sind bezüglich der Druckmediumleitungen 144a und 144b parallel geschaltet. In der Anfangsphase einer Druckmediumzufuhr über die Leitung 144b ist der Drucknehmer 140 infolge der Wirkungskette Anschlag 96e3 - Handbetätigungsstange 96e2 - Betätigungsgestänge 96d - Hebelmechanik 141 blockiert, so daß die gesamte Druckmediumzufuhr zu einer Verstellung des Drucknehmers 97 bzw. dessen Kolbenstange führt. Ist schließlich der Riegel 96e1 ausgerückt und die Handbetätigungsstange 96e2 verschwenkt, so wird die Kolbenstange des Drucknehmers 97 durch den Riegel 96e1 blockiert, so daß die gesamte weitere Druckmediumzufuhr zu einer Verstellung des Drucknehmers 140 und somit letztenendes des Sperriegels 96c führt.

Nachzutragen ist noch, daß bei Einsatz eines linear verstellbaren Drucknehmers 40 der Drucknehmer 97 lediglich auf den Riegel 96e1 einzuwirken braucht und der Schwenkhebel 98 weggelassen werden kann. Der Drucknehmer 40 wirkt nämlich am inneren Ende der Handbetätigungsstange 96e2 in einem vorbestimmten Abstand von deren Längsverschiebungsachse ein, welche durch den Gelenkverbindungspunkt der Handbetätigungsstange 96e2 mit dem Betätigungsgestänge 96d verläuft. Daher übt der Drucknehmer 40 auf die Handbetätigungsstange 96e2 auch ein Drehmoment um den vorstehend genannten Gelenkverbindungspunkt mit dem Betätigungsgestänge 96d aus. Durch dieses Drehmoment wird die Handbetätigungsstange 96e2 nach Freigabe der ersten vom Riegel 96e1 gebildeten Sicherung derart verschwenkt, daß sie von dem die zweite Sicherung bildenden Anschlag 96e3 freikommt. Anschließend kann der Drucknehmer 40 die Handbetätigungsstange 96e2 in Fig. 11 nach links aus der Sattelplatte herausschieben unter Überführung des Kupplungsschlosses 96 in die Freigabestellung.

Nachzutragen ist ferner, daß die Verbindung der Hebelmechanik 141 mit dem Betätigungsgestänge 96d über einen Freilauf 96d1/141b erfolgen kann, wie er in Fig. 11 gestrichelt angedeutet ist. Das Vorsehen eines derartigen Freilaufs hat den Vorteil, daß bei Ausfall der Fernbetätigungseinrichtung die Betätigungsstange 96e2 ohne weiteres von Hand verstellt werden kann. Der Freilauf 96d1/141b ermöglicht also einen problemlosen Notfallbetrieb.

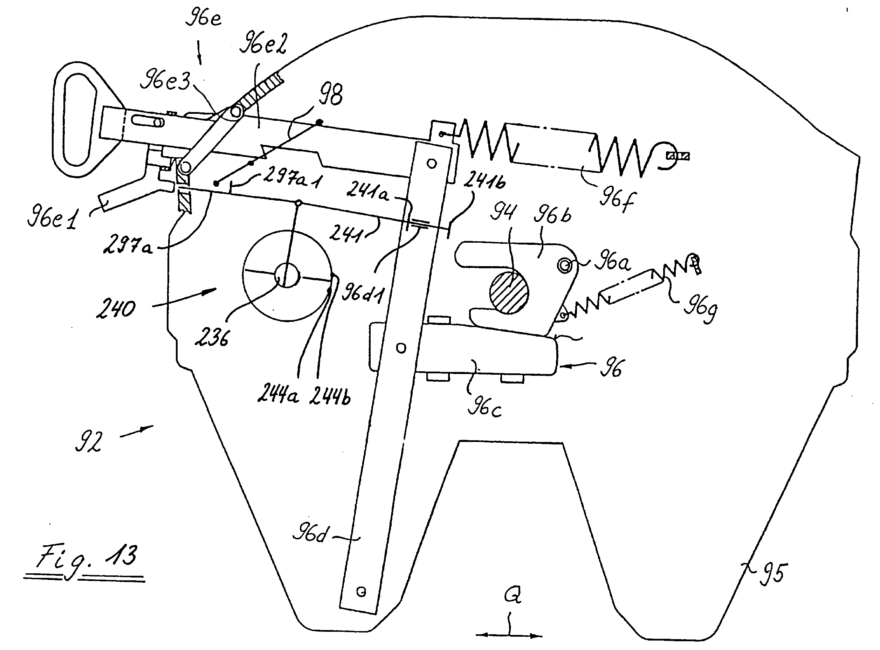

Bei der Ausführungsform gemäß Fig. 12 ist im Unterschied zur Ausführungsform gemäß Fig. 11 auch der weitere Drucknehmer, welcher für das Ausrücken des Riegels 96e1 und das anschließende Verschwenken der Handbetätigungsstange 96e2 verantwortlich ist, als drehverstellbarer Drucknehmer 197 ausgebildet. Die Funktion der Kolbenstange 97a wird dabei von einem Stellgestänge 197a übernommen, welches mit der Betätigungswelle 197c des Drucknehmers 197 verbunden ist, mit seinem freien Ende 197a2 auf den Riegel 96e1 einwirkt und mit einem Ansatz 197a1 mit dem Hebel 98 zusammenwirkt. Ähnlich der Ausführungsform gemäß Fig. 11 sind die beiden Drucknehmer 140 und 197 bezüglich der Druckmediumleitungen 144a und 144b fluidisch parallel geschaltet. Hinsichtlich der Funktion des Drucknehmers 197 sei auf die Beschreibung der Ausführungsform gemäß Fig. 11 verwiesen.

Bei der Ausführungsform gemäß Fig. 13 schließlich sind die Funktionen des Ausrückens des Riegels 96e1, des Verschwenkens der Handbetätigungsstange 96e2, sowie deren Ausfahrens aus der Sattelplatte 95 zum Zwecke des Öffnens der Sattelkupplung 92 in einem einzigen drehverstellbaren Drucknehmer 240 vereint. Die Betätigungswelle 236 dieses Drucknehmers 240 ist hierzu zum einen mit einem Stellgestänge 297a verbunden, das das Ausrücken des Riegels 96e1 und das anschließende Verschwenken der Handbetätigungsstange 96e2 übernimmt. Das Stellgestänge 297a entspricht in Aufbau und Funktion dem Stellgestänge 197a der Ausführungsform gemäß Fig. 12, auf dessen Beschreibung hiermit verwiesen sei. Zum anderen ist die Betätigungswelle 236 mit einem Stellgestänge 241 verbunden, welches das Ausfahren der Handbetätigungsstange 96e2 aus der Sattelplatte 95 und somit das Öffnen der Sattelkupplung 92 bzw. das Einfahren dieser Handbetätigungsstange 96e2 in die Sattelplatte 95 und somit das Schließen der Sattelkupplung 92 übernimmt.

Das Gestänge 241 umfaßt hierzu zwei Anschläge 241a und 241b, welche mit Gegenanschlägen zusammenwirken, die beispielsweise an einer Gestängedurchführung 96d1 vorgesehen sein können. Durch entsprechende Anordnung des Anschlags 241b und des zugehörigen Gegenanschlags wird sichergestellt, daß mit dem Ausfahren der Handbetätigungsstange 96e2 aus der Sattelplatte 95 erst dann begonnen wird, wenn diese aufgrund des Zusammenwirkens des Ansatzes 297a1 mit dem Hebel 98 bereits in der Darstellung gemäß Fig. 13 entgegen dem Uhrzeigersinn verschwenkt worden ist. Ansonsten sei wiederum auf die Beschreibung der Ausführungsformen gemäß Fig. 11 und 12 verwiesen. Beim Schließen der Sattelkupplung 92 kann durch Zusammenwirken des Anschlags 241a mit dem zugehörigen Gegenanschlag der Durchführung 96d1 auf den Sperriegel 96c eine in Schließrichtung der Sattelkupplung gerichtete Kraft ausgeübt werden.

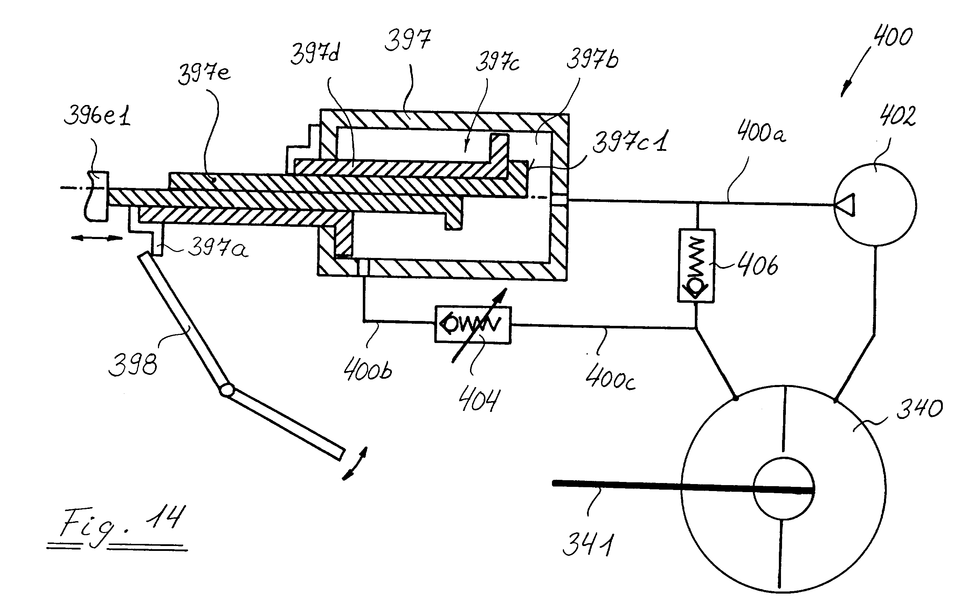

Mit Bezug auf Fig. 14 sollen im folgenden Aufbau und Funktion einer konkreten Ausführungsform eines Hydraulikkreises einer erfindungsgemäßen Fernbetätigungseinrichtung näher erläutert werden:

Die beiden Drucknehmer 340 und 397 sind in einem Hydraulikkreis 400 in Reihe geschaltet mit einer Pumpe 402, die die Funktion des Druckgebers übernimmt. Es sei bereits an dieser Stelle darauf hingewiesen, daß anstelle der Pumpe 402 auch ein handbetätigbarer Druckgeber verwendet werden kann, wie er mit Bezug auf die Figuren 3 - 10 näher beschrieben worden ist.

Das von der Pumpe 402 ausgestoßene Druckfluid wird dem Innenraum 397b des Drucknehmers 397 zugeführt und beaufschlagt dort die Stirnfläche 397c1 eines Doppelkolbens 397c des Drucknehmers 397. Der Doppelkolben 397c umfaßt einen rohrförmigen Kolben 397d und einen in diesem geführten Stößel 397e.

Infolge der Druckbeaufschlagung durch das von der Pumpe 402 zugeführte Fluid wird der Doppelkolben 397c in Fig. 14 nach links verschoben, bis er in Anlage gegen den Riegel 396e1 gelangt, der die erste Sicherung gegen ein unbeabsichtigtes Öffnen des nicht dargestellten Kupplungsschlosses der Sattelkupplung darstellt. Bei weiterer Druckfluidzufuhr zum Drucknehmer 397 wird der Riegel 396e1 mittels des Stößels 397e in Fig. 14 nach links verlagert unter Aufhebung der ersten Sicherung.

Hat der Riegel 396e1 seine Endstellung erreicht, so bleibt auch der Stößel 397e stehen, während sich der äußere Kolben 397d bei fortgesetzter Druckmediumzufuhr in Fig. 14 weiter nach links verlagert. Ein am äußeren Kolben 397d angeordneter Mitnehmer 397a tritt im Zuge dieser Bewegung in Kontakt mit dem Schwenkhebel 398, welcher die zweite Sicherung gegen unbeabsichtigtes Öffnen des Kupplungsschlosses bildet und zur Aufhebung dieser zweiten Sicherung die in Fig. 14 nicht dargestellte Handbetätigungsstange 96e2 (s. Fig. 11) außer Eingriff mit dem Anschlag 96e3 verschwenken kann.

Ist auch der äußere Kolben 397d gegen Anschlag gefahren, wie dies in Fig. 14 in der unteren Halbdarstellung des Doppelkolbens 387c des Drucknehmers 397 gezeigt ist, so steht die Zufuhrleitung 400a des Hydraulikkreises 400 über den Innenraum 397b des Drucknehmer 397 in Fluidverbindung mit einer Auslaßleitung 400b. Hat der Druck des von der Pumpe 402 zugeführten Druckfluids in der Auslaßleitung 400b einen vorbestimmten Druckwert, beispielsweise 30 bar überschritten, so öffnet ein Überströmventil 404 und das Druckmedium kann über einen weiteren Leitungsabschnitt 400c zum Drucknehmer 340 strömen.

Infolge dieser Druckmediumzufuhr wird die mit dem Drucknehmer 340 verbundene Hebelmechanik 341 derart betätigt, daß das Kupplungsschloß aus seiner Verriegelungsstellung in seine Freigabestellung übergeführt wird. Zur Ermöglichung eines Notfallbetriebs kann die Hebelmechanik 341 mit den Betätigungsgestänge 96d (s. Fig. 11) wiederum über einen Freilauf verbunden sein, wie für das Ausführungsbeispiel gemäß Fig. 11 beschrieben worden ist.

Bei erneuten Ankuppeln fällt das Schloß der Sattelkupplung, wie vorstehend beschrieben worden ist, automatisch zu, und das Betätigungsgestänge 96d (s. Fig. 11) wird mittels der Zugfeder 96f in seine Ausgangsposition zurückgezogen. Das hierdurch vom Drucknehmer 340 abfließende Druckfluid kann über ein Rückschlagventil 406 zur Pumpe 402 bzw. einem mit dieser verbundenen Druckmediumvorrat zurückströmen. Eine Rückkehr des Doppelkolbens 397c in seine Ausgangsstellung, die in Fig. 14 im oberen Teilbild des Doppelkolbens 397c des Drucknehmers 397 dargestellt ist, wird unter der Wirkung einer (nicht dargestellten) Feder bewerkstelligt, wobei ein Druckmediumausgleich durch eine Druckfluidleckage am äußeren Kolben 397d vorbei erfolgt.

Nachzutragen ist noch, daß die erfindungsgemäße Fernbetätigungseinrichtung mit jeder geeigneten Art von Druckfluid, d.h. Druckgas oder Druckflüssigkeit betrieben werden kann, wobei jedoch im Hinblick auf die Inkompressibilität des Druckmediums einer Druckflüssigkeit vorteilhaft ist.

## Patentansprüche

1. Kupplung (10; 92) zur gelenkigen Verbindung eines Zugfahrzeugs (16) und eines Nachlauffahrzeugs (26), umfassend:
- eine mit einem Riegel (20; 96c) verbundene Betätigungseinheit (30; 96d) zum Öffnen und Schließen der Kupplung, und
- eine mit der Betätigungseinheit (30; 96d) in Eingriff stehende Fernbetätigungseinrichtung (42),
wobei die Fernbetätigungseinrichtung (42) eine mittels eines Druckmediums betätigbare Drucknehmer-Stelleinheit (40) (im folgenden kurz: "Drucknehmer") mit zwei durch ein verlagerbares Drucknehmer-Kolbenelement (40a) voneinander getrennten, volumenveränderlichen Kammern (40c, 40d) umfaßt,
wobei das Drucknehmer-Kolbenelement (40a) mit der Betätigungseinheit (30; 96d) in Eingriff steht, und
wobei die beiden Kammern (40c, 40d) jeweils an eine Druckmedium-Zuführ/Abführ-Leitung (44a, 44b) angeschlossen sind, so daß das Drucknehmer-Kolbenelement (40a) sowohl in einer dem Öffnen der Kupplung (10; 92) entsprechenden Richtung als auch in einer dem Schließen der Kupplung (10; 92) entsprechenden Richtung mit Druckmedium beaufschlagbar ist,
**dadurch gekennzeichnet**,
daß das Drucknehmer-Kolbenelement (40a) sowohl bei Bewegung in der dem Öffnen der Kupplung (10; 92) entsprechenden Richtung als auch bei Bewegung in der dem Schließen der Kupplung (10; 92) entsprechenden Richtung mit der Betätigungseinheit (30; 96d) in Kraftübertragungseingriff steht, und
daß die beiden an die Kammern (40c, 40d) des Drucknehmers (40) angeschlossenen Druckmedium-Zuführ/Abführ-Leitungen (44a, 44b) über ein selbsttätig öffnendes, durch Betätigung von außen verschließbares Bypass-Ventil (52) miteinander verbunden sind.

2. Kupplung nach Anspruch 1,
**dadurch gekennzeichnet**, daß das Bypass-Ventil (52) bei Beendigung einer Betätigung von außen unabhängig von einem etwaigen Druckmedium-Durchfluß schließt.

3. Kupplung nach Anspruch 1,
**dadurch gekennzeichnet**, daß das Bypass-Ventil (52) nach Beendigung einer Betätigung von außen erst dann schließt, wenn die es pro Zeiteinheit durchströmende Menge an Druckmedium einen vorbestimmten Schwellenwert unterschreitet.

4. Kupplung nach einem der Ansprüche 1 bis 3,
**dadurch gekennzeichnet**, daß sie ferner eine Druckgeber-Einheit (48; 148; 248) (im folgenden kurz "Druckgeber") mit zwei durch ein verlagerbares Druckgeber-Kolbenelement (48a; 148a) voneinander getrennten, volumenveränderlichen Kammern (48c, 48d; 148c, 148d) umfaßt, von denen jede an eine der Druckmedium-Zuführ/Abführ-Leitungen (44a, 44b; 144a, 144b) angeschlossen ist, wobei das Druckgeber-Kolbenelement (48a; 148a) mit einem Betätigungselement (48g; 148g; 248g), vorzugsweise einem Handbetätigungselement, verbunden ist.

5. Kupplung nach Anspruch 4,
**dadurch gekennzeichnet**, daß eine Federeinheit (50; 150) vorgesehen ist, welche das Druckgeber-Kolbenelement (48a; 148a) und das Betätigungselement (48g; 148g; 248g) in eine Ausgangsstellung vorspannt.

6. Kupplung nach Anspruch 4 oder 5,
**dadurch gekennzeichnet**, daß das Betätigungselement (248g) ferner zur Betätigung des Bypass-Ventils (252) ausgebildet ist.

7. Kupplung nach einem der Ansprüche 4 bis 6,
**dadurch gekennzeichnet**, daß das Betätigungselement zwei relativ zueinander und gemeinsam bewegbare Teile (249a, 290) umfaßt, wobei das Bypass-Ventil (252) durch eine Relativbewegung der beiden Teile (249a, 290) betätigbar ist, und das Druckgeber-Kolbenelement (248a) durch eine gemeinsame Bewegung der beiden Teile (249a, 290) verlagerbar ist.

8. Kupplung nach Anspruch 7,
**dadurch gekennzeichnet**, daß das Betätigungselement einen Handbetätigungs-Hebel (290) mit einem Griffteil (248g) und einem mit der Betätigungswelle (249) des Druckgebers (248) fest verbundenen Schwenkachsenteil (249a) umfaßt, wobei das Griffteil (248g) an dem Schwenkachsenteil (249a) um eine Griffachse (G) verdrehbar angeordnet ist.

9. Kupplung nach Anspruch 8,
**dadurch gekennzeichnet**, daß das Griffteil (248g)im Bereich seines betätigungswellen-nahen Endes einen Mitnehmer (290a) aufweist, der mit einem im Inneren der hohlen Betätigungswelle (249) aufgenommenen, mit dem Bypass-Ventil (252) in Wirkverbindung stehenden Stellgestänge (284) in Mitnahmeeingriff bringbar ist.

10. Kupplung nach einem der Ansprüche 1 bis 9,
**dadurch gekennzeichnet**, daß in einem die beiden Druckmedium-Zuführ/Abführ-Leitungen verbindenden Leitungsabschnitt (270a, 270b) de Bypass-Ventiles (252) zwei einander entgegengesetzt angeordnete Sitzventile (282a, 282b) angeordnet sind, deren Ventilkörper (282a1, 282b1) zum Öffnen des Bypass-Ventils (252) mittels eines Stellelements (284) von den jeweiligen Ventilsitzen (282a3, 282b3) abhebbar sind.

11. Kupplung nach Anspruch 10,
**dadurch gekennzeichnet**, daß das Stellelement (284) in die die Sitzventile (282a, 282b) öffnende Stellung vorgespannt ist.

12. Kupplung nach einem der Ansprüche 1 bis 9,
**dadurch gekennzeichnet**, daß in einem die beiden Druckmedium-Zuführ/Abführ-Leitungen verbindenden Leitungsabschnitt (170a, 170b) ein Schieberventil (172) vorgesehen ist, wobei der Ventilschieber (172a) mit einer Umfangsausnehmung (172a1) versehen ist, welche derart angeordnet und bemessen ist, daß in einer ersten Stellung des Ventilschiebers (172a) die beiden an das Schieberventil (172) angrenzenden Teile des Leitungsabschnitts (170a, 170b) über die Umfangsausnehmung (172a1) miteinander verbunden sind, während sie in einer zweiten Stellung des Ventilschiebers (172a) voneinander getrennt sind.

13. Kupplung nach Anspruch 12,
**dadurch gekennzeichnet**, daß der Ventilschieber (172a) in die erste Stellung vorgespannt ist.

14. Kupplung nach einem der Ansprüche 1 bis 13,
**dadurch gekennzeichnet**, daß wenigstens eine der Einheiten, Druckgeber (148) oder Drucknehmer (140), einen Ringraum (156d) umfaßt, der zum einen durch das jeweilige Kolbenelement (148a, 140a) und zum anderen durch eine Ringraum-Unterteilungsanordnung (160) in die beiden Kammern (148c, 148d) unterteilt ist.

15. Kupplung nach Anspruch 14,
**dadurch gekennzeichnet**, daß das Kolbenelement (148a) an seinem radial äußeren Ende (148a1) eine Ausnehmung (148a2) zur Aufnahme eines Dichtungselements (158) aufweist.

16. Kupplung nach Anspruch 14 oder 15,
**dadurch gekennzeichnet**, daß die Ringraum-Unterteilungsanordnung (160) ein Dichtungselement (162) und zwei Dichtungshalte-Elemente (160a) umfaßt.

17. Kupplung nach Anspruch 16,
**dadurch gekennzeichnet**, daß die Dichtungshalte-Elemente (160a) identisch ausgebildet und im Ringraum (156d) spiegelsymmetrisch zueinander angeordnet sind.

18. Kupplung nach Anspruch 16 oder 17,
**dadurch gekennzeichnet**, daß die Dichtungshalte-Elemente (160a) an einem Ringraum-Gehäuse (156) durch Steckverbindungen befestigbar sind.

19. Kupplung nach den Ansprüchen 15 und 16 sowie gewünschtenfalls Anspruch 17 oder 18,
**dadurch gekennzeichnet**, daß das im Kolbenelement (148a) aufgenommene Dichtungselement (158) und das Dichtungselement (162) der Ringraum-Unterteilungsanordnung (160) identisch ausgebildet sind.

20. Kupplung nach Anspruch 19,
**dadurch gekennzeichnet**, daß das Dichtungselement (158, 162) einen im wesentlichen rechteck-förmigen Grundriß aufweist, wobei längs des Umfangs dieser Rechtecks-Form zwei Dichtungslippen (158a, 158b) verlaufen.

21. Kupplung nach einem der Ansprüche 14 bis 20,
**dadurch gekennzeichnet**, daß das Kolbenelement (140a, 148a) mit einer im Bereich der Ringachse (B, H) verlaufenden Betätigungswelle (136, 149) verbunden ist.

22. Kupplung nach einem der Ansprüche 14 bis 21,
**dadurch gekennzeichnet**, daß der Ringraum (156d) von einem Gehäuse (156) umschlossen ist, das ein Ringraumbegrenzungselement (156a) mit im wesentlichen kreiszylindrischer Innenfläche (156a1) sowie ein Deckelelement (156b) und ein Bodenelement (156c) umfaßt.

23. Kupplung nach Anspruch 22,
**dadurch gekennzeichnet**, daß im Deckelelement (156b) oder/und im Bodenelement (156c) Anschlußstellen für die beiden Druckmedium-Zuführ/Abführ-Leitungen (144a, 144b) und gewünschtenfalls für wenigstens ein Entlüftungsventil (166) vorgesehen sind.

24. Kupplung nach einem der Ansprüche 4 bis 23,
**dadurch gekennzeichnet**, daß die beiden Einheiten, Druckgeber (148) und Drucknehmer (140), baugleich ausgeführte Basis-Baugruppen (154) umfassen.

25. Kupplung nach Anspruch 24,
**dadurch gekennzeichnet**, daß die Basis-Baugruppe (154) mit einer Feder-Baugruppe (151) verbunden ist, welche das Druckgeber-Kolbenelement (148a) in die Ausgangsstellung vorspannt.

26. Kupplung nach einem der Ansprüche 1 bis 25,
**dadurch gekennzeichnet**, daß wenigstens eine der Einheiten, Druckgeber oder/und Drucknehmer, eine Mehrzahl von Basis-Baugruppen umfaßt.

27. Kupplung nach einem der Ansprüche 1 bis 26,
**dadurch gekennzeichnet**, daß sie eine Anhängerkupplung (10) ist, bei welcher der Riegel (20) zur gelenkigen Verbindung von Zugfahrzeug (16) und Nachlauffahrzeug (26) eine Zugöse (22) einer Deichsel (24) des Nachlauffahrzeugs (26) durchsetzt.

28. Kupplung nach einem der Ansprüche 1 bis 26,
**dadurch gekennzeichnet**, daß sie eine Sattelkupplung (92) ist, bei welcher der Riegel (96c) zur gelenkigen Verbindung von Zugfahrzeug (16) und Nachlauffahrzeug (26) einen den Königszapfen (94) des Nachlauffahrzeugs (26) haltenden Kupplungshaken (96b) in einer Kupplungsstellung sichert.

29. Fernbetätigungseinrichtung (42) mit einer mittels eines Druckmediums betätigbaren Drucknehmer-Stelleinheit (40) (im folgenden kurz: "Drucknehmer"), welche zwei durch ein verlagerbares Drucknehmer-Kolbenelement (40a) voneinander getrennte, volumenveränderliche Kammern (40c, 40d) umfaßt,
wobei das Drucknehmer-Kolbenelement (40a) mit einem Stellelement (40e) der Fernbetätigungseinrichtung (42) in Eingriff steht, und
wobei die beiden Kammern (40c, 40d) jeweils an eine Druckmedium-Zuführ/Abführ-Leitung (44a, 44b) angeschlossen sind, so daß das Drucknehmer-Kolbenelement (40a) von beiden Kammern (40c, 40d) her mit Druckmedium beaufschlagbar ist,
**dadurch gekennzeichnet**,
daß die beiden an die Kammern (40c, 40d) des Drucknehmers (40) angeschlossenen Druckmedium-Zuführ/Abführ-Leitungen (44a, 44b) über ein selbsttätig öffnendes, durch Betätigung von außen verschließbares Bypass-Ventil (52) miteinander verbunden sind.

30. Fernbetätigungseinrichtung nach Anspruch 29,
**dadurch gekennzeichnet**, daß sie wenigstens ein Fernbetätigungseinrichtungs-Merkmal nach einem der Ansprüche 2 bis 26 aufweist.
